(19) Europäisches Patentamt
European Patent Office
Office européen des brevets

(11) **EP 4 571 098 A1**

(12) **EUROPEAN PATENT APPLICATION**

(43) Date of publication:
**18.06.2025 Bulletin 2025/25**

(21) Application number: **23307205.7**

(22) Date of filing: **14.12.2023**

(51) International Patent Classification (IPC):
**F03D 7/02** (2006.01)　　　　**F03D 7/04** (2006.01)

(52) Cooperative Patent Classification (CPC):
**F03D 7/0224; F03D 7/024; F03D 7/0302;**
**F03D 7/044;** F03D 7/0202; F03D 7/045;
F05B 2270/32; F05B 2270/334; F05B 2270/342

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **TotalEnergies OneTech**
**92400 Courbevoie (FR)**

(72) Inventors:
• **CAPALDO, Matteo**
　**92400 COURBEVOIE (FR)**
• **CHARAFEDDINE, Jawad**
　**92400 COURBEVOIE (FR)**

(74) Representative: **Lavoix**
　**2, place d'Estienne d'Orves**
　**75441 Paris Cedex 09 (FR)**

(54) **A CONTROL METHOD FOR CONTROLLING A WIND TURBINE, RELATED CONTROL SYSTEM AND SET OF COMPUTER PROGRAM(S)**

(57)　The present invention concerns a control method for controlling a wind turbine (15), the method comprising forming a control model of the wind turbine. The control model is configured to actively damp a tower pitch inclination ($\phi$) by calculating, from a measurement of a tower pitch speed, a value of each controllable blade pitch angle to provide to a blade actuator (60). The control model comprises, for each blade, a compensation gain calculated based on a predetermined formula and representative of a wind turbine dynamic. Each compensation gain is configured to determine the corresponding controllable blade pitch angle.

The control method comprises receiving, at a time instant, a measurement of the tower pitch speed.

The control method comprises calculating a value of each controllable blade pitch angle based on the control model, and transmitting to the wind turbine, a control's command comprising the calculated value of each controllable blade pitch angle.

FIG.1

EP 4 571 098 A1

**Description**

TECHNICAL FIELD OF THE INVENTION

The present invention concerns a control method for controlling an offshore wind turbine. The invention also concerns an electronic control system and set of computer program(s) configured to implement said control method. The invention concerns the field of offshore wind turbine, and in particular floating offshore wind turbine.

BACKGROUND OF THE INVENTION

To produce renewable energy, it is known to use the power of wind. To this end, wind turbines have been developed for decades.

Actually, two main concepts of wind turbines exist. In both of them, the wind turbine comprises a tower and a rotor including blades at one of the tower extremity.

The first concept is applicable to both onshore and offshore. With this concept, the wind turbines comprise a foundation fixed to the ground for onshore turbine or to the sea floor for offshore turbines, and the tower extends from said foundation.

The second concept only concerns the offshore wind turbine. According to said second concept, the wind turbine comprises a floating platform partially submerged and partially emerged, the tower extending from said floating platform. Said wind turbines are thus floating on a water body. The wind turbines according to the second concept are thus able to pivot around a pitch axis at their floating platform.

With the wind turbines according to said concepts, when air is flowing through the blades of the rotor, it applies a force on the wind turbine.

When the turbine is fixed to the ground, or sea floor, this force creates pitch vibration of the structure of the wind turbine. Actually, the tower of the wind turbine has the same behavior as an embedded beam row subjected a non-constant force at its free end.

When the turbine is floating at the water surface said force created by the wind induces a pitch motion of said platform. Since the rotor is located at an upper part of the wind turbine, this force makes the wind turbine oscillating around a vertical position.

In addition, concerning offshore wind turbine, the preceding phenomena are emphasized by a force created by the waves on the wind turbine.

For all type of wind turbine, it is known that the efficiency is maximized if the rotation speed of the turbine's rotor is maintained constant. To ensure this, wind turbines comprises blade actuator configured to adjust a pitch angle of the blade. Based on it, the force of the wind over the blades can be adapted to maintain the rotation speed constant.

However, the rotor dynamic is also influenced by the inclination of the turbine with respect to a vertical axis, either a pitch angle of the floating platform or an inclination due to vibration. Thus, the rotor dynamic is also influenced by an inclination of the tower, i.e. a tower dynamic. Consequently, the rotor dynamic and the tower dynamic of the wind turbine are coupled making it particularly challenging to ensure a constant rotation speed of the rotor.

In the prior art, it is known to apply a decoupling control model to the wind turbine in order to decouple the rotor dynamic and the tower dynamic. The rotor dynamic is then controlled by the blade pitch angle no matter the tower dynamic.

However, this control technique increases an amplitude of the tower inclination inducing high amplitude oscillations of a base tower moment.

Thus, with said technique, the material of the wind turbine is subjected to high fatigue and exposed to fracture risks. To overcome this last problem it is known to strengthen the tower. However, this leads to a higher weight of the wind turbine and additional material. In the case of a floating turbine, the floating platform in addition has to be resized in consequence. This oversizing of non-functional pieces of the wind turbine increases strongly the cost of said turbines.

SUMMARY OF THE INVENTION

There exists a need for a control method that would make it possible to avoid strengthening and oversizing of the wind turbine without increasing the fracture risk.

To the end, the invention concern a control method for controlling a wind turbine comprising:

- a tower sensibly extending along an elongation axis,
- a rotor comprising blades configured to rotate around a rotation axis sensibly perpendicular to the elongation axis,
- a foundation configured to bear the tower, the tower defining at the foundation, a tower pitch inclination between the elongation axis and a vertical axis sensibly perpendicular to a median plan of the water surface,
- an obtaining device configured to obtain a measurement of a variation of the tower pitch inclination, denoted tower pitch speed, and
- a blade actuator configured to control, for each blade, a respective controllable blade pitch angle of the blades around a respective blade axis sensibly perpendicular to the rotation axis,
the method being implemented by an electronic control system configured to be connected to the obtaining device and to the blade actuator, the method comprising the following steps:

- forming a control model of the wind turbine, the control model being configured to actively damp the tower pitch inclination by calculating, from a measurement of the tower pitch speed, a value of each controllable blade pitch angle to provide to the blade actuator,
the control model comprising, for each blade, a compensation gain calculated based on a set of parameters representative of a wind turbine dynamic and a predetermined formula, the compensation gain being configured to be applied to a quantity representative of the tower pitch speed to determine each controllable blade pitch angle,
- receiving, at a time instant, a measurement of the tower pitch speed,
- calculating, for the time instant, a value of each controllable blade pitch angle based on the control model, and
- transmitting to the wind turbine, a control's command comprising the calculated value of each controllable blade pitch angle.

According to some embodiment of the invention, the control method in addition comprises the following features, taken solely or according to any feasible combination:

- during the calculating step, at each time instant, the calculated values of the controllable blade pitch angle are not constantly equal to each other;
- during the forming step, the compensation gains are not constantly equal to each other;
- each compensation gain is negative;
- wherein the forming step comprises:

  ○ receiving the set of parameters, preferably some of the parameters being common to each blade and some parameters being respective to each blade,
  ○ calculating each compensation gain by applying the predetermined formula to the received set of parameters, and
  ○ forming the control model based on each of the compensation gains;

- the set of parameters is representative of a wind turbine model describing the evolution the tower pitch speed as a function of a wind speed facing the wind turbine and as a function of waves moment at the water surface of the water body;
- during the forming step, the received set of parameters comprises a desired foundation damping ratio, a closed-loop model linking the control model and the wind turbine dynamic model comprising a second order transfer function relating the foundation pitch inclination to the wind speed and the waves moment, the second order transfer function including a damping ratio depending on each compensation gain,
during the forming step each compensation gain being calculated so that the damping ratio of the second order transfer function sensibly matches the desired platform damping ratio;
- the set of parameters comprises:

  ○ a spring like restoring coefficient,
  ○ a height of the tower of the wind turbine according to the elongation axis,
  ○ for each blade, a variation of an aerodynamic force created on the wind turbine by air flowing through said blade of the rotor,
  ○ a natural damping coefficient,
  ○ a variation, of the aerodynamic force created on the wind turbine by air flowing through the blades of the rotor, and
  ○ a moment of inertia,
  during the forming step, each compensation gain being calculated according to the following equation:

$$k_{\beta i} = \frac{1}{h_t \frac{\partial F_a}{\partial \beta_i}} \left( D_t + h_t^2 \frac{\partial F_a}{\partial v} - 2\sqrt{k_t J_t} \zeta_{plt,des} \right)$$

- the received set of parameters comprises quantities representative of the aerodynamic force created on the wind turbine by air flowing through each blade of the rotor,
  calculating each compensation gain comprising calculating each compensation gain based on said quantities representative of the aerodynamic force;
- the receiving step also comprises receiving, at the time instant, a reference tower pitch speed, the reference tower pitch speed being preferably substantially equal to zero,
  during the calculating step, the value of each controllable blade pitch angle being calculated so that the tower pitch speed converges to the reference tower pitch speed;
- the forming step, the receiving step, the calculating step and the transmitting step are repeated for a plurality of successive time instants, preferably in real time;
- during the receiving step, the azimuth of each blade is received, during the calculating step, the value of each controllable blade pitch angle of each blade being in addition calculated based the azimuth of said blade; and
- during the calculating step, a compensation contribution is calculated by applying each compensation gain to a quantity representative of the tower pitch speed,

  for each blade a variant compensation contribution being calculated by multiplying the compensation contribution of said blade with a quantity varying as a function of the sinus of the corresponding azimuth,
  each blade pitch angle being calculated based on the corresponding variant compensation contribution;

- the rotor is configured to rotate at a rotation speed around the rotation axis, the wind turbine in addition comprising a sensor configured to measure the rotational speed, the electronic control system being configured to be also connected to the sensor, during the receiving step, a measurement of the rotation speed being in addition received, during the calculating step, the rotation speed being used by the control model in the calculation of the value of each controllable blade pitch; and
- the control model formed during the forming step in addition comprises a proportional-integral component configured to be applied to a difference between the rotation speed and the reference rotation speed,
  during the calculating step, the value of each controllable blade pitch angle being calculated from the outputs of the proportional-integral component and the compensation gains.

The invention in addition concerns a set of computer program(s) comprising software instructions, which, when being executed by one or several computers, implement a method according to any of the preceding claims.
The invention in addition concerns an electronic control system for controlling a wind turbine comprising:

- a tower sensibly extending along an elongation axis,
- a rotor comprising blades configured to rotate around a rotation axis sensibly perpendicular to the elongation axis,
- a foundation configured to bear the tower, the tower defining at the foundation, a tower pitch inclination between the elongation axis and a vertical axis sensibly perpendicular to a median plan of the water surface,
- an obtaining device configured to obtain a measurement of a variation of the tower pitch angle, denoted tower pitch speed, and
- a blade actuator configured to control, for each blade, a respective controllable blade pitch angle of the blades around a respective blade axis sensibly perpendicular to the rotation axis,
  the electronic control system being configured to be connected to the obtaining device and to the blade actuator, and comprising:

  - a forming module configured to form a control model of the wind turbine, the control model being configured to actively damp the tower pitch inclination by calculating, from a measurement of the tower pitch speed, a value of each controllable blade pitch angle to provide to the blade actuator,
    the control model comprising, for each blade a compensation gain calculated based on a set of parameters representative of a wind turbine dynamic and a predetermined formula, the compensation gain being configured to be applied to a quantity representative of the tower pitch speed to determine each controllable blade pitch angle,
  - a controller configured to receive, at a time instant, a measurement of the tower pitch speed,

    the controller being in addition configured to calculate, for the time instant, a value of each controllable blade pitch angle based on the control model and the received measurement of the tower pitch speed, and
    to transmit to the wind turbine, a control's command comprising the calculated value of each controllable blade pitch angle.

BRIEF DESCRIPTION OF THE DRAWINGS

The invention will be better understood upon reading the description that follows, which is provided only by way of an example and made with reference to the drawings in which;

- Figure 1 is a schematic view of a wind turbine system according to a first embodiment and comprising the electronic control system according to the invention;
- Figure 2 is a schematic view of a closed-loop model of the wind turbine comprising a control model calculated by the electronic control system of Figure 1;
- Figure 3 is a flow chart of a control method according to the invention;
- Figure 4 is a schematic view of a wind turbine system according to a second embodiment and comprising the electronic control system according to the invention;
- Figure 5 is a schematic front view of a wind turbine according to the embodiment of Figure 1 or 4;
- Figure 6 is a schematic view of a closed-loop model of the wind turbine comprising a variant of a control model calculated by the electronic control system of Figure 1;
- Figure 7 is a simulation graph illustrating an example of a wind excitation provided to the wind turbine of figure 1;
- Figure 8 is a simulation graph showing the evolution of the pitch angle for the wind turbine receiving the wind excitation of Figure 7, according to several control strategies;
- Figure 9 is a simulation graph illustrating an example of a wave excitation provided to the wind turbine of figure 1;
- Figure 10 is a simulation graph showing the evolution of the pitch angle for the wind turbine receiving the wave excitation of Figure 9, according to several control strategies; and
- Figure 11 is a simulation graph showing the evolution of the pitch angle for the wind turbine receiving the wind excitation of Figure 7 and the wave excitation of Figure 9, according to several control strategies.

DETAILED DESCRIPTION OF SOME EMBODIMENTS

A wind turbine system 10 includes a wind turbine 15, also denoted turbine 15, and an electronic control system 20.

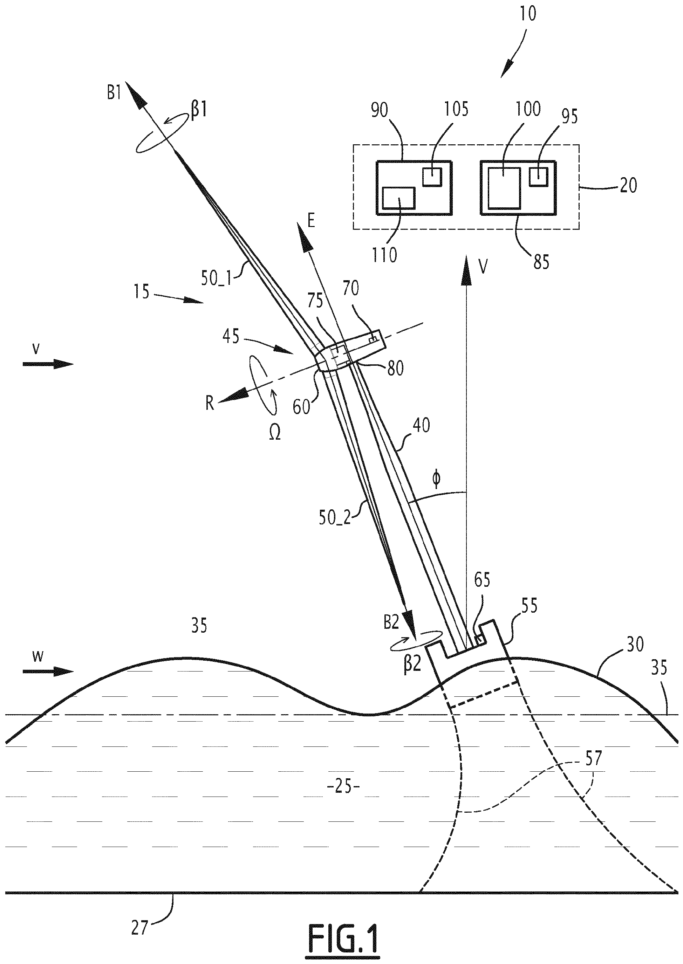

In a first embodiment illustrated in Figure 1, the wind turbine 15 is configured to float on a water body 25. In Figure 1, the wind turbine 15 floats on said water body 25. The water body 25 is for example an ocean, a lake, a sea, or a river.

The water body 25 extends from a sea floor 27 and comprises a water surface 30 on which the wind turbine 15 is floating. The water surface 30 defines a median plan 35, which is sensibly horizontal.

A vertical axis V is defined perpendicularly to the median plan 35.

The water surface 30 also defines some waves that distance the surface 30 from the median plan 35. The waves are moving on the water surface 30 in a direction sensibly parallel to the median plan 35 and according to a speed. Thus, the waves generate, on the platform, a reversing moment induced by their height and speed, denoted waves moment w. The waves moment w is for example positive or negative..

There is some wind above the water surface 30, which is for example directed in a direction parallel to the median plan 35. The wind has a wind speed v.

The offshore wind turbine 15 comprises a tower 40 extending along an elongation axis E.

The wind turbine 15 in addition comprises a rotor 45, for example located at an extremity of the tower 40. The rotor 45 comprises blades 50_1, 50_2, 50_3, for example angularly distributed around a rotation axis R which is sensibly perpendicular to the elongation axis E. The rotor for example comprises three blades 50_1, 50_2, 50_3.

The wind turbine 15 also comprises foundation 55 bearing the tower 40. In this embodiment, the foundation is a floating platform 55 configured to float at the water surface 30 of the water body 25. The floating platform 55 is preferably located at another extremity of the tower 40. The floating platform 55 is configured to float so that the elongation axis E forms a tower pitch inclination $\phi$ with the vertical axis V. In this embodiment, the wind turbine 15 defines an overall pitch motion forming the tower pitch inclination $\phi$, which corresponds to a platform pitch angle $\phi$.

Preferably and as illustrated in Figure 1, the floating platform is partially submerged and partially emerged.

The platform 55 is preferably linked to the sea floor 27 via an anchoring system 57 for example comprising an anchor and chains connected to both the anchor and the floating platform 55. The blades 50_1, 50_2, 50_3 are configured to rotate at a rotation speed fl around the rotation axis R. The blades 50_1, 50_2, 50_3 extend, from the rotation axis R, along a blade axis B_1, B_2, B3 respective of the blade 50_1, 50_2, 50_3. Each blade axis B_1, B_2, B_3 is sensibly perpendicular to the rotation axis R. Each blade 50_1, 50_2, 50_3 is also rotatable around the corresponding blade axis B_1, B_2, B_3 defining a respective controllable blade pitch angle $\beta1$, $\beta2$, $\beta3$. Each blade pitch angle $\beta1$, $\beta2$, $\beta3$ makes it possible to modify angle of attack of the respective blade 50_1, 50_2, 50_3 with the wind in the environment of the wind turbine 15.

The wind turbine 15 in addition comprises a blade actuator 60 configured to control the controllable blade pitch angle $\beta1$, $\beta2$, $\beta3$ of each blade 50_1, 50_2, 50_3 individually.

The wind turbine 15 in addition comprises an obtaining device 65 configured to obtain a measurement of a variation of the tower pitch inclination $\phi$, which is denoted tower pitch speed $\dot{\phi}$. In the first embodiment, the tower pitch speed $\dot{\phi}$ is a platform pitch speed. Preferably, the obtaining device 65 is a first sensor configured to measure directly the variation $\dot{\phi}$ of the platform pitch angle $\dot{\phi}$. The first sensor 65 is for example an Inertial Measurement Unit (IMU).

Alternatively, the obtaining device 65 is configured to obtain said measurement from a measuring system, for example common for a plurality of wind turbines 15.

The wind turbine 15 in addition comprises a second sensor 70 configured to measure a rotation speed $\Omega$. Preferably, the second sensor 70 is in addition configured to measure the rotation angle $\theta$. The rotation angle $\theta$ is a primitive of the rotation speed $\Omega$, so that $\dot{\theta} = \Omega$, where $(\dot{\ })$ is the time derivative. The second sensor 70 is for example an electromagnetic sensor coupled to the rotor. Alternatively, the second sensor is also an IMU.

Preferably, the wind turbine 15 in addition comprises a generator 75 mechanically connected to the rotor 45 and a generator torque actuator 80.

The generator 75 is configured to convert the rotation mechanical energy from the rotor 45, into electrical energy. The generator 75 for example comprises a non-represented gearbox ensuring the mechanical connection between the rotor 45 and the generator 75. The gearbox is configured to adjust a respective rotation speed of the generator 75 in function of the rotation speed fl of the rotor 45

The generator 75 comprises a torque $\tau_g$ which is controllable and which induces a resistance to the rotation of the generator 75. Since the generator 75 and the rotor 45 are mechanically connected, the generator torque $\tau_g$ defines a rotational resistance on the rotor 45.

The generator torque actuator 80 is configured to set the controllable generator torque $\tau_g$. This is for example achieved by imposing a well-chosen current in the generator.

To sum it up, the wind turbine 15 is configured to output, via the obtaining device 65 and the second sensor 70, measurement(s) of platform pitch speed $\dot{\phi}$ and preferably also of rotation speed fl. The wind turbine 15 is controllable, by the controllable blade pitch angle $\beta$ via the blade actuator 60, and preferably also by the controllable generator torque $\tau_g$ via the generator torque actuator 80.

The electronic control system 20 comprises a forming module 85 and a controller 90.

The forming module 85 is for example a computer comprising a first processor 95 and a first memory 100. Similarly, the controller 90 is also for example a computer comprising a second processor 105 and a second memory 110.

In an embodiment, the first 100 and the second 110 memories are configured to store a respective software, comprising software instructions configured to be executed by the respective processor 95, 105.

Each of the aforementioned software is in addition able to be stored on a support, non-represented, readable by computer.

The support readable by computer is for example a medium able to memorize, i.e. to store, electronic instructions and able to be coupled to a computer system bus. As an example, the readable support is an optic disk, a magneto-optic disk, a ROM memory, a RAM memory, each kind of non-transitory memory (for example EPROM, EEPROM, FLASH, NVRAM), a magnetic card or an optic card. On the or each of the readable support, is then memorized, i.e. stored, a computer program comprising software instructions.

Alternatively, at least one of the forming module 85 or the controller 90 is a programmable logic component, such as a Field Programmable Gate Array (FPGA) or an integrated circuit such as an Application Specific Integrated Circuit (ASIC).

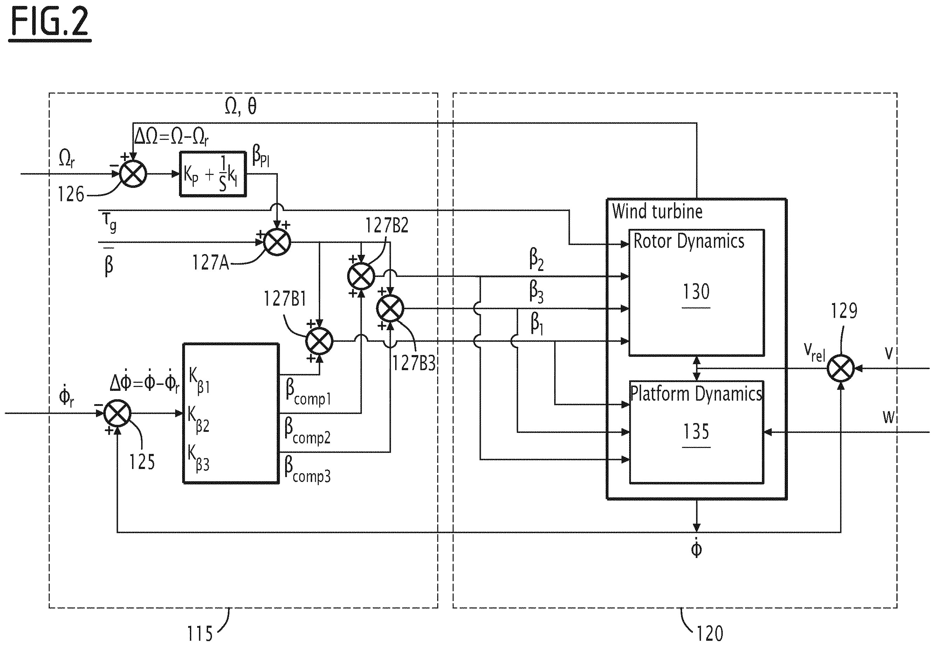

The forming module 85 is configured to determine a control model 115 of the wind turbine 15. The control model is for example illustrated in Figure 2. The control model 115 is configured to calculate, from measurement(s) of the platform pitch speed $\dot{\phi}$ and preferably of the rotation speed fl, a value of the controllable pitch angle $\beta$ to provide to the blade actuator 60 and preferably a value of the controllable generator torque $\tau_g$ to provide to the generator torque actuator 80, as it will be detailed below.

The controller 90 is configured to implement the control model 115, represented in figure 2 to control the wind turbine 15.

To this end, the controller 90 is configured to be connected to the obtaining device 65 and the second 70 sensor. The controller 90 is in addition configured to be connected to the blade actuator 60, and preferably connected to the generator torque actuator 80.

The controller 90 is configured to receive, from the obtaining device 65 and the second sensors 70, the measurement of the platform pitch speed $\dot{\phi}$ and preferably also the measurement of the rotation angle $\Omega$. The controller 90 is configured to then calculate a value of each controllable blade pitch angle $\beta 1$, $\beta 2$, $\beta 3$ from the received measurement(s). The controller 90 is preferably configured to receive a value of the controllable generator torque $\tau_g$. The controller 90 is configured to then provide the calculated value of each controllable blade pitch angle $\beta 1$, $\beta 2$, $\beta 3$ to the blade actuator 60 and preferably to provide the received value of the controllable generator torque $\tau_g$ to the generator torque actuator 80.

Preferably, the controller 90 is in addition configured to receive a reference value of the rotation speed $\Omega_r$ and a

reference value of the platform pitch speed $\dot{\phi}_r$. The controller 90 is thus configured to control the wind turbine 15 so that the rotation speed fl converges to the reference rotation speed $\Omega_r$ and so that the platform pitch speed $\dot{\phi}$ converges to the reference platform pitch speed $\dot{\phi}_r$.

Advantageously, the controller 90 is configured to receive a mean value of the controllable blade pitch angle $\overline{\beta}$. The mean value $\overline{\beta}$ is the value of the controllable blade pitch angles $\beta1$, $\beta2$, $\beta3$ ensuring that the rotation speed fl is equal to the reference rotation speed $\Omega_r$ and the platform pitch speed $\dot{\phi}$ is equal to the reference platform pitch speed $\dot{\phi}_r$ at an operating point wherein the wind speed $v$ and the waves moment $w$ are constant. In other words, if the wind speed $v$ and the waves moment $w$ are constant, having:

[MATH 1]

$$\beta1 = \overline{\beta}$$

$$\beta2 = \overline{\beta}$$

$$\beta3 = \overline{\beta}$$

ensures having:

[MATH 2]

$$\Omega = \Omega_r$$

$$\dot{\phi} = \dot{\phi}_r$$

Thus, it is clear that the value of each controllable blade pitch angle $\beta1$, $\beta2$, $\beta3$ is oscillating around the mean value $\overline{\beta}$.

Figure 2 represents an example of the control model 115 and a wind turbine dynamic model 120 forming together a closed-loop model.

The control model 115 comprises compensation gains $k_{\beta1}$, $k_{\beta2}$, $k_{\beta3}$ calculated from a predetermined formula and configured to be applied to a quantity representative of the platform pitch speed $\dot{\phi}$ to actively damp the platform pitch angle $\phi$. One respective compensation gain $k_{\beta1}$, $k_{\beta2}$, $k_{\beta3}$ is associated to each controllable blade pitch angle $\beta1$, $\beta2$, $\beta3$ . By "actively damp the platform pitch angle $\phi$", it is understood that a transfer function between the platform pitch angle $\phi$ and an input detailed below, can be modeled as a second order transfer function comprising a quality factor lower than 10, preferably equal to 5 and even more preferably equal to 3.33. In comparison, a natural damping corresponds to quality factor sensibly equal to 30.

The quantity representative of the platform pitch speed $\dot{\phi}$ is for example a first difference $\Delta\dot{\phi}$ between the platform pitch speed $\dot{\phi}$ and the reference platform pitch speed $\dot{\phi}_r$ so that:

[MATH 3]

$$\Delta\dot{\phi} = \dot{\phi} - \dot{\phi}_r$$

To this end, the control model 115 comprises a first comparator 125 configured to calculate said first difference $\Delta\dot{\phi}$.

Thus, the control model 115 is configured to calculate, for each blade 50_1, 50_2, 50_3, a respective compensation contribution of blade pitch angle $\beta_{comp1}$, $\beta_{comp2}$, $\beta_{comp3}$ according to the following equations:

[MATH 4]

$$\beta_{comp1} = k_{\beta1}\,\Delta\dot{\phi}$$

$$\beta_{comp2} = k_{\beta2}\,\Delta\dot{\phi}$$

$$\beta_{comp3} = k_{\beta3}\,\Delta\dot{\phi}$$

Preferably, the control model 115 in addition comprises a proportional-integral component $k_p + \dfrac{1}{s}k_i$ configured to be applied to a quantity representative of the rotation speed fl.

The quantity representative of the rotation speed fl is for example a second difference $\Delta\Omega$ between the rotation speed fl and the reference rotation speed $\Omega_r$ so that:

[MATH 5]

$$\Delta\Omega = \Omega - \Omega_r$$

To this end, the control model 115 comprises a second comparator 126 configured to calculate said second difference $\Delta\Omega$.

Thus, the proportional-integral component $k_p + \dfrac{1}{s}k_i$ is configured to calculate a proportional-integral contribution of blade pitch angle $\beta_{PI}$ according to the following equation:

[MATH 6]

$$\beta_{PI} = \left(k_p + \frac{1}{s}k_i\right)\Delta\Omega$$

where s is the Laplace variable,
$k_p$ is a proportional gain, and
$k_i$ is an integral gain.

Optionally, the control model in addition comprises third comparators 127A, 127B1, 127B2, 127B3 each associated to a respective blade 50_1, 50_2, 50_3 and configured to sum the compensation contribution of the blade pitch angle $\beta_{comp1}$, $\beta_{comp2}$, $\beta_{comp3}$ of the associated blade 50_1, 50_2, 50_3, the proportional-integral contribution of the blade pitch angle $\beta_{PI}$ and preferably the mean value of the blade pitch angle $\overline{\beta}$ to form the controllable blade pitch angle $\beta1$, $\beta2$, $\beta3$ of the associated blade 50_1, 50_2, 50_3 according to the following equations:

[MATH 7]

$$\beta1 = \beta_{comp1} + \beta_{PI} + \overline{\beta}$$

$$\beta2 = \beta_{comp2} + \beta_{PI} + \overline{\beta}$$

$$\beta3 = \beta_{comp3} + \beta_{PI} + \overline{\beta}$$

An action of the controller model 115 can thus be summed up with following equation:

[MATH 8]

$$u_c = K_0 x + u_{c,ol}$$

where $u_c = \begin{bmatrix} \beta1 \\ \beta2 \\ \beta3 \\ \tau_g \end{bmatrix}$ is an input vector,

$x = \begin{bmatrix} \theta \\ \Omega \\ \phi \\ \dot{\phi} \end{bmatrix}$ is a state space vector,

8

$$K_0 = \begin{bmatrix} k_i & k_p & 0 & k_{\beta 1} \\ k_i & k_p & 0 & k_{\beta 2} \\ k_i & k_p & 0 & k_{\beta 3} \\ 0 & 0 & 0 & 0 \end{bmatrix}$$ is a controller matrix, and

$$u_{c,ol} = \begin{bmatrix} \overline{\beta} - k_p \Omega_r - k_i \theta_r - k_{\beta 1} \dot{\phi}_r \\ \overline{\beta} - k_p \Omega_r - k_i \theta_r - k_{\beta 2} \dot{\phi}_r \\ \overline{\beta} - k_p \Omega_r - k_i \theta_r - k_{\beta 3} \dot{\phi}_r \\ \tau_g \end{bmatrix}$$ is an additional control, with $\theta_r = \Omega_r t \, mod(2\pi)$, $mod(\,)$ being the modulo function, t being the time.

The wind turbine dynamic model 120 comprises a linear combinatory block 129, a rotor dynamics component 130 and a foundation dynamic component 135.

The wind turbine dynamic model 120 is configured to receive, the controllable blade pitch angles $\beta 1$, $\beta 2$, $\beta 3$, the wind speed $v$, the waves moment $w$ and preferably the controllable generator torque $\tau_g$ as inputs and to output the platform pitch speed $\dot{\phi}$ and the rotation speed $\Omega$ via the obtaining device 65 and the second sensor 70.

The linear combinatory block 129 is configured to calculate a relative wind speed $v_{rel}$ on the rotor 45 from the wind speed $v$ and the platform pitch speed $\dot{\phi}$, for example according to the following equation:

[MATH 9]

$$v_{rel} = v - h_t \dot{\phi}$$

where $h_t$ is the height of the tower 40.

Actually, due to the platform pitch motion of the wind turbine 15, the speed of the wind in contact to the rotor 45 is not exactly the wind speed v, but variates. Actually, as represented in Figure 1, if the platform pitch speed $\dot{\phi}$ is positive, the relative speed $v_{rel}$ is lower than the wind speed $v$. A contrario, if the platform pitch speed $\dot{\phi}$ is negative, the relative speed $v_{rel}$ is higher than the wind speed $v$.

The rotor dynamic component 130 is connected to the linear combinatory block 129. The rotor dynamic component 130 is configured to calculate the rotation speed fl in function of the controllable blade pitch angle $\beta$ and preferably in function of the generator torque $\tau_g$ and the relative wind speed $v_{rel}$, for example from the following equations:

[MATH 10]

$$\dot{\Omega} = \frac{N_g}{J_r}\left(\frac{\partial \tau_a}{\partial \Omega}\Omega + \frac{\partial \tau_a}{\partial v}v_{rel} + \frac{\partial \tau_a}{\partial \beta 1}\beta 1 + \frac{\partial \tau_a}{\partial \beta 2}\beta 2 + \frac{\partial \tau_a}{\partial \beta 3}\beta 3 - N_g \tau_g\right)$$

where $N_g$ is a gearbox ratio of the rotor 45,

$J_r$ is an inertia of the rotor 45 around the rotation axis R,

$\dfrac{\partial \tau_a}{\partial \Omega}$ is a variation of an aerodynamic torque $\tau_a$ in function of the rotation speed fl,

$\dfrac{\partial \tau_a}{\partial v}$ is a variation of the aerodynamic torque $\tau_a$ in function of the wind speed v, and

$\dfrac{\partial \tau_a}{\partial \beta 1}, \dfrac{\partial \tau_a}{\partial \beta 2}, \dfrac{\partial \tau_a}{\partial \beta 3}$ are variations of the aerodynamic torque $\tau_a$ in function of each controllable blade pitch angles $\beta 1$, $\beta 2$, $\beta 3$, each variation being in function of a respective controllable blade pitch angle $\beta 1$, $\beta 2$, $\beta 3$.

The foundation dynamic component 135 is connected to the linear combinatory block 129. The foundation dynamic component 135 is configured to calculate the platform pitch speed $\dot{\phi}$ in function of each controllable blade pitch

angle $\beta 1$, $\beta 2$, $\beta 3$ and preferably in function of the relative wind speed $v_{rel}$ and the waves moment w, for example from the following equations:

[MATH 11]

$$J_t \ddot{\phi} + D_t \dot{\phi} + k_t \phi = h_t \left( \frac{\partial F_a}{\partial \Omega} \Omega + \frac{\partial F_a}{\partial v} v_{rel} + \frac{\partial F_a}{\partial \beta 1} \beta 1 + \frac{\partial F_a}{\partial \beta 2} \beta 2 + \frac{\partial F_a}{\partial \beta 3} \beta 3 \right) + \frac{\partial \tau_w}{\partial w} w$$

where $J_t$ is a moment of inertia of the platform 55, its order of magnitude being sensibly equal to $10^{11}$,
$D_t$ is a natural damping coefficient of platform 55, its order of magnitude being sensibly equal to $10^{10}$,
$k_t$ is a spring-like restoring coefficient (mainly given by a mooring lines of the floating platform 55), its order of magnitude being sensibly equal to $10^{11}$,

$\frac{\partial F_a}{\partial \Omega}$ is a variation of an aerodynamic force created on the wind turbine 15 by air flowing through the blades 50, in function of the rotation speed fl,

$\frac{\partial F_a}{\partial v}$ is a variation of the aerodynamic force created on the wind turbine 15 by air flowing through the blades 50, in function of the wind speed v,

$\frac{\partial F_a}{\partial \beta 1}$, $\frac{\partial F_a}{\partial \beta 2}$, $\frac{\partial F_a}{\partial \beta 3}$ are variations of the aerodynamic force created on the wind turbine 15 by air flowing through each blades 50_1, 50_2, 50_3, in function of each controllable blade pitch angle $\beta 1$, $\beta 2$, $\beta 3$, each variation being in function of a respective controllable blade pitch angle $\beta 1$, $\beta 2$, $\beta 3$, and

$\frac{\partial \tau_w}{\partial w}$ is a variation of an overturning moment given by the waves, in function of the waves moment w.

The moment of inertia $J_t$ preferably is the moment of inertia of the platform 55 around an unrepresented axis around which the platform pitch angle $\phi$ is defined. Said unrepresented axis is preferably sensibly perpendicular to the vertical axis V and to the wind speed's axis.
The wind turbine dynamic model 120 can be summed up as follow:

[MATH 12]

$$\dot{x} = A_0 x + B_c u_c + B_d u_d$$

with $\dot{x} = \begin{bmatrix} \Omega \\ \dot{\Omega} \\ \dot{\phi} \\ \ddot{\phi} \end{bmatrix}$ and $u_d = \begin{bmatrix} v \\ w \end{bmatrix}$

$$A_0 = \begin{bmatrix} 0 & 1 & 0 & 0 \\ 0 & \frac{N_g}{J_r} \frac{\partial \tau_a}{\partial \Omega} & 0 & -h_t \frac{N_g}{J_r} \frac{\partial \tau_a}{\partial v} \\ 0 & 0 & 0 & 1 \\ 0 & \frac{h_t}{J_t} \frac{\partial F_a}{\partial \Omega} & \frac{-k_t}{J_t} & -\frac{1}{J_t} \left( D_t + h_t^2 \frac{\partial F_a}{\partial v} \right) \end{bmatrix}$$

$$B_c = \begin{bmatrix} 0 & 0 & 0 & 0 \\ \dfrac{N_g}{J_r}\dfrac{\partial \tau_a}{\partial \beta 1} & \dfrac{N_g}{J_r}\dfrac{\partial \tau_a}{\partial \beta 2} & \dfrac{N_g}{J_r}\dfrac{\partial \tau_a}{\partial \beta 3} & -\dfrac{N_g^2}{J_r} \\ 0 & 0 & 0 & 0 \\ \dfrac{h_t}{J_t}\dfrac{\partial F_a}{\partial \beta 1} & \dfrac{h_t}{J_t}\dfrac{\partial F_a}{\partial \beta 2} & \dfrac{h_t}{J_t}\dfrac{\partial F_a}{\partial \beta 3} & 0 \end{bmatrix}$$

$$B_d = \begin{bmatrix} 0 & 0 \\ \dfrac{N_g}{J_r}\dfrac{\partial \tau_a}{\partial v} & 0 \\ 0 & 0 \\ \dfrac{h_t}{J_t}\dfrac{\partial F_a}{\partial v} & \dfrac{1}{J_t}\dfrac{\partial \tau_w}{\partial w} \end{bmatrix}$$

The closed-loop system represented in Figure 2 thus follows the following equations system:

[MATH 13]

$$\dot{x} = Ax + B_c u_{c,col} + B_d u_d$$

where

$$A = A_0 + B_c K_0 =$$

$$\begin{bmatrix} 0 & 1 & 0 & 0 \\ k_i\dfrac{N_g}{J_r}\sum_{i=1}^{3}\dfrac{\partial \tau_a}{\partial \beta i} & \dfrac{N_g}{J_r}\left(\dfrac{\partial \tau_a}{\partial \Omega}+k_p\sum_{i=1}^{3}\dfrac{\partial \tau_a}{\partial \beta i}\right) & 0 & \dfrac{N_g}{J_r}\left(-h_t\dfrac{\partial \tau_a}{\partial v}+\sum_{i=1}^{3}k_{\beta i}\dfrac{\partial \tau_a}{\partial \beta i}\right) \\ 0 & 0 & 0 & 1 \\ k_i\dfrac{h_t}{J_t}\sum_{i=1}^{3}\dfrac{\partial F_a}{\partial \beta i} & \dfrac{h_t}{J_t}\left(\dfrac{\partial F_a}{\partial \Omega}+k_p\sum_{i=1}^{3}\dfrac{\partial F_a}{\partial \beta i}\right) & \dfrac{-k_t}{J_t} & \dfrac{1}{J_t}\left(-D_t - h_t^2\dfrac{\partial F_a}{\partial v}+h_t\sum_{i=1}^{3}k_{\beta i}\dfrac{\partial F_a}{\partial \beta i}\right) \end{bmatrix}$$

Then, the transfer matrix $A_{plt}$ relating the platform pitch angle $\phi$ and the platform pitch speed $\dot{\phi}$ to the wind speed wind v and to the waves moment w corresponds to the bottom right 2-2 matrix of the closed-loop matrix A, so that:

[MATH 14]

$$A_{plt} = \begin{bmatrix} 0 & 1 \\ \dfrac{-k_t}{J_t} & \dfrac{1}{J_t}\left(-D_t - h_t^2\dfrac{\partial F_a}{\partial v}+h_t\sum_{i=1}^{3}k_{\beta i}\dfrac{\partial F_a}{\partial \beta i}\right) \end{bmatrix}$$

A transfer function $G_{plt}(s)$ in the Laplace domain of the foundation system closed-loop system is calculated according to the following formula:

[MATH 15]

$$G_{plt}(s) = \left(sI - A_{plt}\right)^{-1} B_d$$

where I is the identity matrix, and
( )⁻¹ is the matrix inverse.

Looking at the pitch angle $\phi$, it can be written in the Laplace domain:

[MATH 16]

$$\phi(s) = G_{plt_{1,1}}(s)v(s) + G_{plt_{1,2}}(s)w(s)$$

where:

[MATH 17]

$$\left[G_{plt_{1,1}}(s) \quad G_{plt_{1,2}}(s)\right]$$

$$= \left[\frac{\frac{h_t}{J_t}\frac{\partial F_a}{\partial v}}{s^2 + \frac{1}{J_t}\left(D_t + h_t^2\frac{\partial F_a}{\partial v} - h_t\Sigma_{i=1}^3 k_{\beta i}\frac{\partial F_a}{\partial \beta i}\right)s + \frac{k_t}{J_t}} \quad \frac{\frac{1}{J_t}\frac{\partial \tau_w}{\partial w}}{s^2 + \frac{1}{J_t}\left(D_t + h_t^2\frac{\partial F_a}{\partial v} - h_t\Sigma_{i=1}^3 k_{\beta i}\frac{\partial F_a}{\partial \beta i}\right)s + \frac{k_t}{J_t}}\right]$$

also reformulated as:

[MATH 18]

$$\left[G_{plt_{1,1}}(s) \quad G_{plt_{1,2}}(s)\right] = \frac{1}{s^2 + \frac{1}{J_t}\left(D_t + h_t^2\frac{\partial F_a}{\partial v} - h_t\Sigma_{i=1}^3 k_{\beta i}\frac{\partial F_a}{\partial \beta i}\right)s + \frac{k_t}{J_t}}\left[\frac{h_t}{J_t}\frac{\partial F_a}{\partial v} \quad \frac{1}{J_t}\frac{\partial \tau_w}{\partial w}\right]$$

Considering the Laplace variable s in the frequency domain, s = $jv$, where $j$ is the pure imaginary number, $v$ is an angular frequency equal to $2\pi f$ with $f$ the frequency, the denominator of the preceding equation may be reformulated as:

[MATH 19]

$$\frac{1}{(jv)^2 + \frac{1}{J_t}\left(D_t + h_t^2\frac{\partial F_a}{\partial v} - h_t\Sigma_{i=1}^3 k_{\beta i}\frac{\partial F_a}{\partial \beta i}\right)jv + \frac{k_t}{J_t}} = \frac{1}{1 - \left(\frac{v}{v_{plt}}\right)^2 + 2j\zeta_{plt}\frac{v}{v_{plt}}}$$

with $v_{plt}$ is the cutoff angular frequency of the foundation transfer function $G_{plt}(s)$, and $\zeta_{plt}$ is the damping ratio of the foundation transfer function $G_{plt}(s)$ where:

[MATH 20]

$$v_{plt} = \sqrt{\frac{k_t}{J_t}}$$

$$\zeta_{plt} = \frac{1}{2\sqrt{k_t J_t}}\left(D_t + h_t^2\frac{\partial F_a}{\partial v} - h_t\sum_{i=1}^3 k_{\beta i}\frac{\partial F_a}{\partial \beta i}\right)$$

The transfer functions $[G_{plt_{1,1}}(s) \ G_{plt1,2}(s)]$ are second order transfer functions, and particularly second order low pass filters.
Similarly, from the matrix $A$ upper, it can be derived a rotor transfer function $G_{rot}(s)$ in the Laplace domain such that:

[MATH 21]

$$\Omega(s) = G_{rot}(s)v(s)$$

where:

[MATH 22]

$$G_{rot}(s) = \frac{\frac{\partial \tau_a}{\partial v} s}{s^2 - \frac{N_g}{J_r}\frac{\partial \tau_a}{\partial w}s - \frac{N_g}{J_r}\sum_{i=1}^{3}\frac{\partial \tau_a}{\partial \beta i}\left(k_p s + k_i\right)}$$

One may notice in the preceding equation, that $\sum_{i=1}^{3}\frac{\partial \tau_a}{\partial \beta i}$ is the sum of each variations of the aerodynamic torque $\tau_a$ at it appears alone in the equation. It can thus be reformulated as $\frac{\partial \tau_a}{\partial \beta_{collective}}$, where $\beta_{collective}$ is a mean value of the blade pitch angles $\beta_1$, $\beta_2$, $\beta_3$.

Considering the Laplace variable $s$ in the frequency domain, s = jv, $G_{rot}(s)$ may be reformulated as:

[MATH 23]

$$G_{rot}(jv) = \frac{1}{1 + \frac{j}{2\zeta_{rot}}\left(\frac{v}{v_{rot}} - \frac{v_{rot}}{v}\right)} \frac{-\frac{\partial \tau_a}{\partial v}}{\frac{N_g}{J_r}\frac{\partial \tau_a}{\partial w} + \frac{N_g}{J_r}\frac{\partial \tau_a}{\partial \beta_{collective}}k_p}$$

One can notice that $G_{rot}(jv)$ is thus a second order band-pass filter as long as the integral gain $k_i$ is negative, where $v_{rot}$ is the cutoff angular frequency of the rotor transfer function $G_{rot}(s)$, and $\zeta_{rot}$ is the damping ratio of the rotor transfer function $G_{rot}(s)$ where:

[MATH 24]

$$v_{rot} = \sqrt{-\frac{N_g}{J_r}\frac{\partial \tau_a}{\partial \beta_{collective}}k_i}$$

$$\zeta_{rot} = \frac{\frac{N_g}{J_r}\frac{\partial \tau_a}{\partial w} + \frac{N_g}{J_r}\frac{\partial \tau_a}{\partial \beta}k_p}{2\sqrt{-\frac{N_g}{J_r}\frac{\partial \tau_a}{\partial \beta_{collective}}k_i}}$$

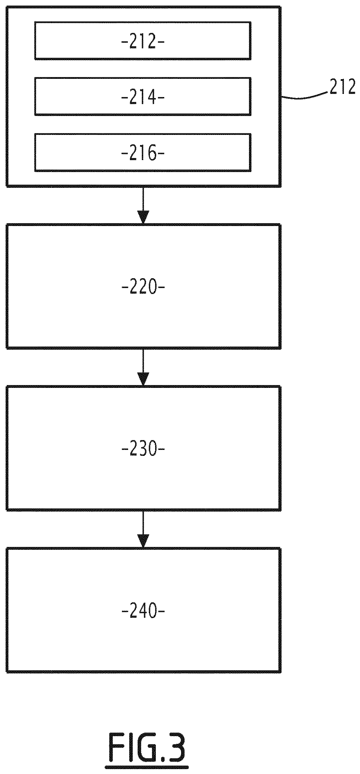

A control method for controlling the wind turbine 15 will now be detailed in reference to Figure 3 representing a flow chart of said method.

Initially, the controller 90 does not have any control model 115.

The control method comprises a forming step 210 wherein the forming module 85 forms the control model 115.

Preferably, the forming step 210 comprises receiving sub-step 212 wherein the forming module 85 receives the set of parameters of the wind turbine 15, for example from an operator of the forming module 85.

The set of parameters of the wind turbine comprises for example:

- the height $h_t$ of the tower 40 of the wind turbine 15 along the elongation axis E,
- the spring-like restoring coefficient $k_t$,
- the variations $\frac{\partial F_a}{\partial \beta 1}$, $\frac{\partial F_a}{\partial \beta 2}$, $\frac{\partial F_a}{\partial \beta 3}$ of the aerodynamic force $F_a$ as a function of each blade pitch angle $\beta 1$, $\beta 2$, $\beta 3$, each variation being as a function of a respective controllable blade pitch angle $\beta 1$, $\beta 2$, $\beta 3$,
- the natural damping coefficient $D_t$ of the wind turbine 15,
- the variation $\frac{\partial F_a}{\partial v}$, as a function of the wind speed +v, of the aerodynamic force $F_a$, and

- the moment of inertia $J_t$ of the wind turbine 15.

Optionally, the set of parameters in addition comprises a desired foundation damping ratio $\zeta_{plt,des}$ of the platform pitch angle $\phi$. The desired foundation damping ratio is preferably higher than 0.050, more preferably higher than 0.075 and even more preferably equal to 0.100.

Optionally, during the receiving sub-step 212, the set of parameters obtained in addition comprises:

- the gearbox ratio $N_g$ of the rotor 45,
- the inertia $J_r$ of the rotor 45,
- the variation $\dfrac{\partial \tau_a}{\partial v}$ of the aerodynamic torque $\tau_a$ in function of the wind speed v,
- the variations $\dfrac{\partial \tau_a}{\partial \beta 1}, \dfrac{\partial \tau_a}{\partial \beta 2}, \dfrac{\partial \tau_a}{\partial \beta 3}$ of the aerodynamic torque $\tau_a$ in function of the controllable blade pitch angle $\beta 1$, $\beta 2$, $\beta 3$, each variation being in function of a respective controllable blade pitch angle $\beta 1$, $\beta 2$, $\beta 3$, the sum of which is reformulated as $\dfrac{\partial \tau_a}{\partial \beta_{collective}}$ where $\beta_{collective}$ is a mean value of the blade pitch angles $\beta_1$, $\beta_2$, $\beta_3$.
- a desired rotor cutoff angular frequency $v_{rot,des}$, and
- a desired rotor damping ratio $\zeta_{rot,des}$.

Preferably, the forming step 210 in addition comprises a calculating sub-step 214.

During the calculating sub-step 214, the forming module 85 calculates each compensation gain $k_{\beta 1}, k_{\beta 2}, k_{\beta 3}$ from a predetermined formula.

For example, the forming module 85 calculates each compensation gain $k_{\beta 1}, k_{\beta 2}, k_{\beta 3}$ from the set of received parameters. Preferably, the forming module 85 calculates the compensation gains $k_{\beta 1}, k_{\beta 2}, k_{\beta 3}$ as a function of quantity(ies) representative of the aerodynamic force $F_a$. Optionally, the forming module 85 calculates the compensation gains $k_{\beta 1}, k_{\beta 2}, k_{\beta 3}$ based on the variation $\dfrac{\partial F_a}{\partial v}$ of the aerodynamic force $F_a$ in function of the wind speed v, and based on each variation $\dfrac{\partial F_a}{\partial \beta 1}, \dfrac{\partial F_a}{\partial \beta 2}, \dfrac{\partial F_a}{\partial \beta 3}$ of the aerodynamic force $F_a$ in function of each controllable blade pitch angle $\beta 1$, $\beta 2$, $\beta 3$.

As it can be noticed equation 20 is not directly reversible since, considering a known value of the damping ratio $\zeta_{plt}$ of the foundation transfer function, it comprises three unknown values corresponding to each compensation gain $k_{\beta 1}, k_{\beta 2}, k_{\beta 3}$, for just one equation. Thus, it exists an infinite number of combinations of compensation gains $k_{\beta 1}, k_{\beta 2}, k_{\beta 3}$ that would fulfill equation 20.

Preferably, the forming module 85 calculates each compensation gain $k_{\beta 1}, k_{\beta 2}, k_{\beta 3}$ according to the following equation:

[MATH 25]

$$k_{\beta i} = \frac{1}{h_t \dfrac{\partial F_a}{\partial \beta i}} \left( D_t + h_t^2 \frac{\partial F_a}{\partial v} - 2\sqrt{k_t J_t} \zeta_{plt,des} \right)$$

wherein $k_{\beta i}$ represents each compensation gain $k_{\beta 1}, k_{\beta 2}, k_{\beta 3}$ with $i$ = 1, 2 or 3.

The preceding formula results from the expertise of the inventor since it provide interesting performances, as it is illustrated further in the description. One may notice that is makes it possible to have a foundation damping ratio $\zeta_{plt}$ sensibly close to the desired foundation damping ratio $\zeta_{plt,des}$.

Each compensation gain $k_{\beta 1}, k_{\beta 2}, k_{\beta 3}$ is preferably negative since:

[MATH 26]

$$2\sqrt{k_t J_t} \zeta_{plt,des} > D_t + h_t^2 \frac{\partial F_a}{\partial v}$$

Optionally, during the calculating sub-step 214, the forming module 85 calculates the proportional-integral component $k_p + \frac{1}{s}k_i$ . In particular, the forming module 85 calculates the proportional gain $k_p$ and the integral gain $k_i$ according to the following formulas:

[MATH 27]

$$k_p = \frac{\frac{N_g}{J_r}\frac{\partial \tau_a}{\partial w} + 2\zeta_{rot,des}v_{rot,des}}{\frac{N_g}{J_r}\frac{\partial \tau_a}{\partial \beta_{collective}}}$$

$$k_i = -\frac{v_{rot,des^2}}{\frac{N_g}{J_r}\frac{\partial \tau_a}{\partial \beta_{collective}}}$$

These equations are derived from equations 24.

Preferably, the forming step 210 comprises a forming sub-step 216 wherein the control model 115 is formed from the compensation gains $k_{\beta1}$, $k_{\beta2}$, $k_{\beta3}$, and optionally from the proportional-integral component $k_p + \frac{1}{s}k_i$ .

The forming sub-step 216 in addition comprises transmitting the formed control model 115 to the controller 90.

Alternatively, the forming step 210 does not comprises the calculating sub-step 214. In this case, during the receiving sub-step 212, the forming module 210 receives directly each compensation gain $k_{\beta1}$, $k_{\beta2}$, $k_{\beta3}$, preferably, the proportional-integral gain $k_p + \frac{1}{s}k_i$ and/or the generator torque gain $k_{\tau g}$.

At the end of the forming step 210, the controller 90 is able to implement the control model 115.

During implementation of the control method, in particular during the forming step 210, the compensation gains $k_{\beta1}$, $k_{\beta2}$, $k_{\beta3}$ are distinct from each other. One respective compensation gains $k_{\beta1}$, $k_{\beta2}$, $k_{\beta3}$ is calculated for each blade 50_1, 50_2, 50_3.

During implementation of the control method, the values of the compensation gains $k_{\beta1}$, $k_{\beta2}$, $k_{\beta3}$ vary with respect to each other. The value of each compensation gain $k_{\beta1}$, $k_{\beta2}$, $k_{\beta3}$ varies with respect to the value of each other compensation gain $k_{\beta1}$, $k_{\beta2}$, $k_{\beta3}$.

The control method in addition comprises a receiving step 220, wherein the controller 90 receives, at a time instant, the measurement of the platform pitch speed $\dot{\phi}$ from the obtaining device 65, optionally the measurement of rotation speed $\Omega$ from the second sensor 70, and preferably the measurement of the rotation angle $\theta$ from the second sensor 70.

Preferably, during the receiving step 220, the controller 90 in addition receives the reference platform pitch speed $\dot{\phi}_r$ and optionally the reference rotation speed $\Omega_r$ for the same instant. The reference platform pitch speed $\dot{\phi}_r$ is preferably equal to zero.

Optionally, during the receiving step 220, the controller in addition receives the mean value of controllable blade pitch angle $\overline{\beta}$, corresponding to the reference rotational speed $\Omega_r$ and to the reference platform pitch speed $\dot{\phi}_r$.

Optionally, during the receiving step 220, the controller 90 in addition receives the value of the controllable generator torque $\tau_g$.

The method in addition comprises a calculating step 230 implemented successively with the receiving step 220.

During the calculating step 230, the controller 90 calculates, for said time instant, the value of each controllable blade pitch angle $\beta1$, $\beta2$, $\beta3$ from the compensation gains $k_{\beta1}$, $k_{\beta2}$, $k_{\beta3}$ and the received measurement of the platform pitch speed $\dot{\phi}$. Preferably, the controller 90 calculates the quantity $\Delta\dot{\phi}$ representative of the platform pitch speed $\dot{\phi}$ and calculates the value of each controllable blade pitch angle $\beta1$, $\beta2$, $\beta3$ by applying the corresponding compensation gain $k_{\beta1}$, $k_{\beta2}$, $k_{\beta3}$ to said quantity $\Delta\dot{\phi}$.

Optionally, the controller 90 calculates the value of each blade pitch angle $\beta1$, $\beta2$, $\beta3$ in addition in function of the proportional-integral component $k_p + \frac{1}{s}k_i$ and/or in function of the mean value $\overline{\beta}$ of each blade pitch angle $\beta1$, $\beta2$, $\beta3$, and/or in function of the reference platform pitch speed $\dot{\phi}_r$ and the reference rotation speed $\Omega_r$.

In an example, during the calculating step 230, the controller 90 calculates the first difference $\Delta\dot{\phi}$ between the received measurement of the platform pitch speed $\dot{\phi}$ and the received reference platform pitch speed $\dot{\phi}_r$ according to equation 3, and preferably the second difference $\Delta\Omega$ between the received measurement of the rotation speed $\Omega$ and the received reference rotation speed $\Omega_r$ according to equation 5. Then, the controller 90 calculates each compensation contribution of blade pitch angle $\beta_{comp1}$, $\beta_{comp2}$, $\beta_{comp3}$ according to equation 4, the proportional-integral contribution of

blade pitch angle $\beta_{PI}$ according to equation 6. The controller 90 preferably then calculates the value of each controllable blade pitch angle $\beta 1$, $\beta 2$, $\beta 3$ according to equation 7.

During implementation of the control method, in particular during the calculating step 230, at each instant, the controllable blade pitch angle $\beta 1$, $\beta 2$, $\beta 3$ are distinct from each other. A respective controllable blade pitch angle $\beta 1$, $\beta 2$, $\beta 3$ is calculated for each blade 50_1, 50_2, 50_3.

During implementation of the control method, the calculated values of the controllable blade pitch angle $\beta 1$, $\beta 2$, $\beta 3$ vary with respect to each other. Each controllable blade pitch angle $\beta 1$, $\beta 2$, $\beta 3$ varies with respect to each other controllable blade pitch angle $\beta 1$, $\beta 2$, $\beta 3$.

The control method in addition comprises a transmitting step 240 wherein the controller 90 transmits a control's command to the wind turbine 15. The control's command preferably comprises the calculated value of each controllable blade pitch angle $\beta 1$, $\beta 2$, $\beta 3$. The control's command being preferably transmitted to the blade actuator 60. The blade actuator 60 then adapts each blade pitch angle $\beta 1$, $\beta 2$, $\beta 3$ of the blades 50_1, 50_2, 50_3 to reach the calculated values that it receives from the controller 90.

According to an optional complement, during the transmitting step 240, the control's command preferably comprises the received value of the controllable generator torque $\tau_g$. Said torque $\tau_g$ being preferably transmitted to the generator torque actuator 80. The generator torque actuator 80 then adapts the generator toque $\tau_g$ of the generator 75 to reach the calculated value $\tau_g$ that it receives from the controller 90.

Preferably, the receiving step 220, the calculating step 230 and the transmitting step 240 are repeated for several successive time instants so that the wind turbine 15 is controlled in real time. It is understood by "controlled in real-time" that for each time instant, the aforementioned data fl, $\dot{\phi}$, and optionally $\Omega_r$, $\dot{\phi}_r$, $\overline{\beta}$, $\tau_g$ are received and the controllable blade pitch angles $\beta 1$, $\beta 2$, $\beta 3$ are calculated and provided to the respective actuator 60, 80, and/or that a duration between two successive time instants is lower than 30s.

Preferably, the forming step 210 is also repeated for successive instants.

In particular, the gains $k_{\beta 1}$, $k_{\beta 2}$, $k_{\beta 3}$, $k_p$, $k_i$ are for example recalculated in an asynchronous manner.

For example, each compensation gain $k_{\beta 1}$, $k_{\beta 2}$, $k_{\beta 3}$ is for example recalculated every 25 seconds. The proportional $k_p$ and the integral $k_i$ gains are for example recalculated every 1 or 2 seconds. During the calculating step 230, a value of each compensation contribution of the blade pitch angle $\beta_{comp1}$, $\beta_{comp2}$, $\beta_{comp3}$ is thus for example recalculated every 30 seconds, and a value of the proportional-integral contribution of the blade pitch angle $\beta_{PI}$ is for example recalculated every 3 seconds.

According to an optional complement, during the receiving sub-step 212, the values of:

- the variations $\dfrac{\partial F_a}{\partial \beta 1}$, $\dfrac{\partial F_a}{\partial \beta 2}$, $\dfrac{\partial F_a}{\partial \beta 3}$ as a function of each blade pitch angle $\beta 1$, $\beta 2$, $\beta 3$, of the aerodynamic force $F_a$,

- the variation $\dfrac{\partial F_a}{\partial v}$ , as a function of the wind speed v, of the aerodynamic force $F_a$,

- the variation $\dfrac{\partial \tau_a}{\partial v}$ of the aerodynamic torque $\tau_a$ in function of the wind speed v, and

- the variations $\dfrac{\partial \tau_a}{\partial \beta 1}$, $\dfrac{\partial \tau_a}{\partial \beta 2}$, $\dfrac{\partial \tau_a}{\partial \beta 3}$ of the aerodynamic torque $\tau_a$ in function of each controllable blade pitch angle $\beta 1$, $\beta 2$, $\beta 3$,

are re-estimated, preferably with the help of a predetermined table (resuming the performance of the wind turbine), in function a considered operating point, before being received by the forming module 85.

Optionally, during the controlling step 230 the rotation speed fl and the platform pitch speed $\dot{\phi}$ are controlled to respectively converge to the reference rotation speed $\Omega_r$ and to the reference platform pitch speed $\dot{\phi}_r$.

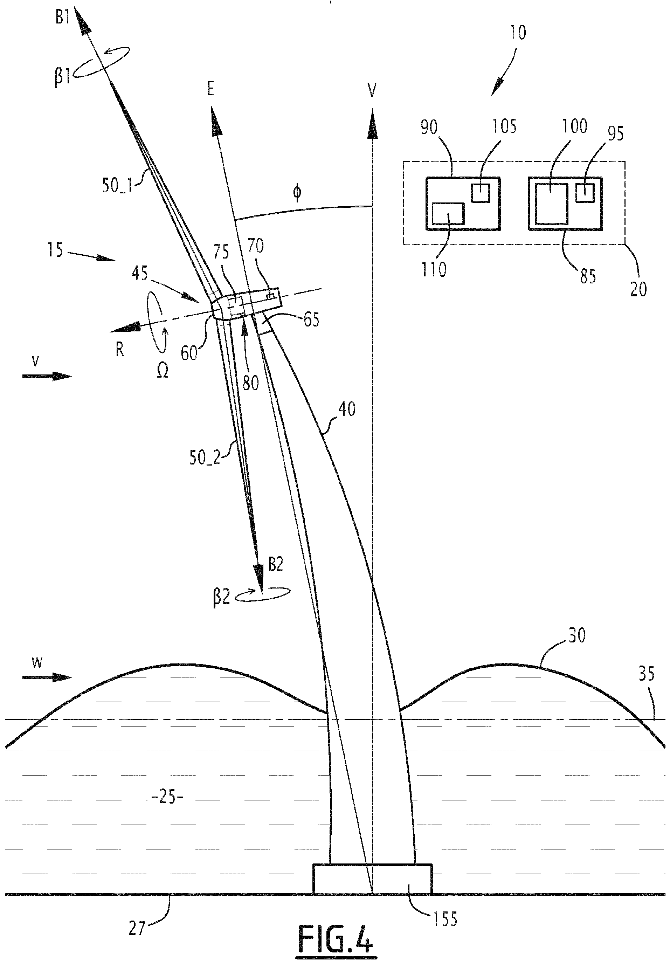

A second embodiment will now be described in reference to Figure 4 and only by its differences with the first embodiment.

In this embodiment, the wind turbine 15 is a fixed offshore wind turbine 15 or a fixed onshore wind turbine 15. Thus, instead of a floating platform 55, the foundation is a base 155 fixed to the sea floor 27. Preferably, the wind turbine 15 does not have any overall degree of freedom with respect to the seed floor 27 or to the water level 30. However, the wind turbine 15 and in particular the tower 40, are subjected to vibrations caused by a deformation of the structure creating tower pitch inclinations $\phi$, also denoted tower vibration amplitude $\phi$. The tower vibration amplitude $\phi$ is defined by an angle between the elongation axis E and the vertical axis V, measured at the extremity of the tower 40 opposed to the base 155, i.e. the extremity where the rotor 45 is located. A tower vibration speed $\dot{\phi}$ is a variation of the tower vibration amplitude $\phi$ with the time. The preceding equations and considerations defined in the first embodiment remain exactly the same considering that $\phi$ represents the tower vibration amplitude instead of the platform pitch angle and that $\dot{\phi}$ represents

the tower vibration speed instead of the platform pitch speed. The obtaining device 65 is for example similar as in the first embodiment except that it is configured to obtain the measurement of the tower vibration speed $\dot{\phi}$ instead of the platform pitch speed.

In this embodiment, the electronic control system 20 and its operation are analog as for the first embodiment except that the order of magnitude of the spring-like restoring coefficient $k_t$ is $10^{12}$, $J_t$ is the moment of inertia of the tower 40 and its order of magnitude is $10^9$, and the natural damping $D_t$ is the natural damping of the tower 40.

In this second embodiment, the tower vibration amplitude is way lower than the platform pitch angle $\dot{\phi}$ of the first embodiment. Consequently the values of each compensation gain $k_{\beta1}$, $k_{\beta2}$, $k_{\beta3}$, the proportional gain $k_p$ and the integral gain $k_i$ are different than ones calculated in the first embodiment even if they are still preferentially calculated from equations 25 and 27.

Its also has to be noted that the second embodiment is also application for a fixed onshore wind turbine 15 except that the wind turbine dynamic model 120 does not comprise any equation related to wave moment w since for onshore wind turbine there is no waves. Thus, the foundation system closed-loop $G_{plt}$ only comprises one transfer function relating the wind speed v to the tower vibration speed $\dot{\phi}$.

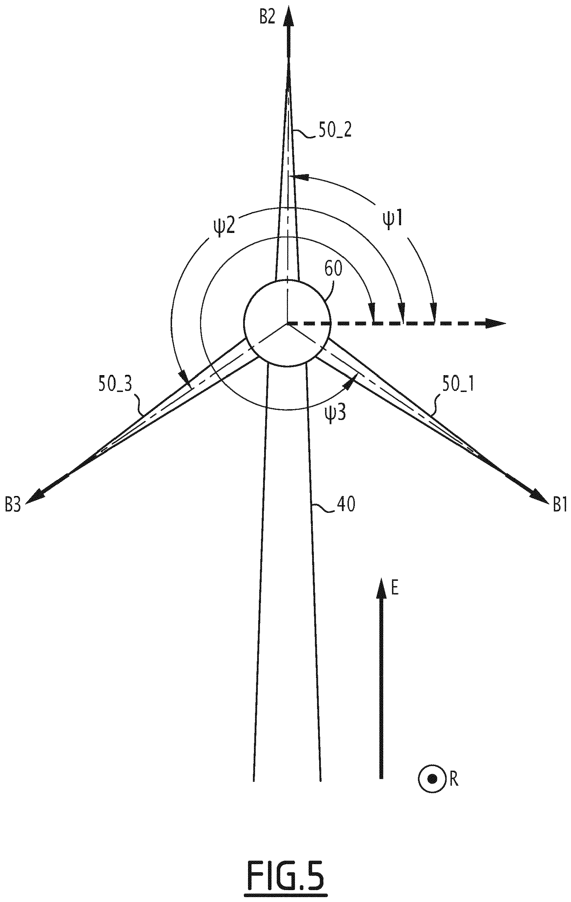

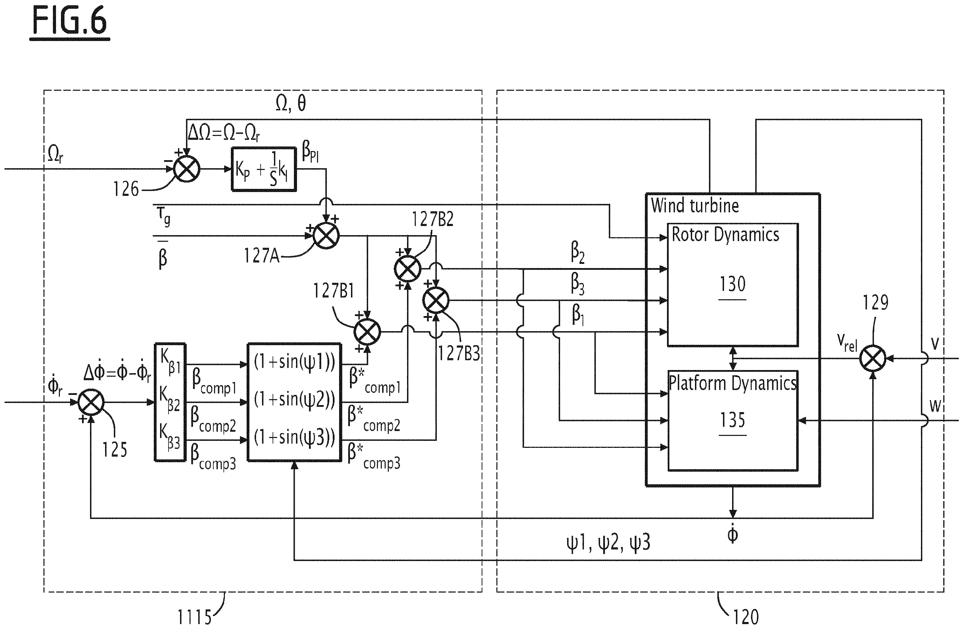

A variant of the two preceding embodiments will now be described in reference to Figures 5 and 6. This variant is similar to the first and second embodiments except that the forming module 85 is configured to form the control model 1115 represented on Figure 6.

In this variant, the wind turbine 15 in addition comprises a third sensor (notrepresented) configured to measure the respective azimuth $\psi1$, $\psi2$, $\psi3$ of each blade 50_1, 50_2, 50_3. In an example, each azimuth $\psi1$, $\psi2$, $\psi3$ is equal to the sum of the rotation angle $\theta$ and a constant $C1$, $C2$, $C3$, each blade 50_1, 50_2, 50_3 being allocated a respective constant $C1$, $C2$, $C3$. In this example, the second and the third sensors form a single unit. Figure 5 illustrates a front view of the wind turbine according to any embodiment. On this figure, the azimuths $\psi1$, $\psi2$, $\psi3$ are illustrated.

In this variant, the controller 90 is in addition configured to receive, from the third sensor, each azimuth $\psi1$, $\psi2$, $\psi3$.

In this variant, the control model 1115 is similar as the control model 115 of Figure 2 except that it comprises an additional block 1116 between the compensation gains $k_{\beta1}$, $k_{\beta2}$, $k_{\beta3}$, and the third comparators 127a, 127B1, 127B2, 127B3.

The controller 90 is configured to calculate, for the additional block 1116, a respective azimuth correction coefficient $k_{\psi1}$, $k_{\psi2}$, $k_{\psi3}$ for each blade 50_1, 50_2, 50_3, preferably according to the following equations:

[MATH 28]

$$k_{\psi1} = (1 + \sin(\psi1 + phase1))$$
$$k_{\psi2} = (1 + \sin(\psi2 + phase2))$$
$$k_{\psi3} = (1 + \sin(\psi3 + phase3))$$

where *phase*1, *phase*2, *phase*3 are constants depending on each blade 50_1, 50_2, 50_3.

Since, the additional block 1116 needs the value of each azimuth $\psi1$, $\psi2$, $\psi3$, in Figure 6, this additional block 1116 is connected to the wind turbine dynamic model 120.

The additional block 1116 is configured to calculate, for each blade 50_1, 50_2, 50_3, a respective variant compensation contributions of blade pitch angles $\beta_{comp1}^*$, $\beta_{comp2}^*$, $\beta_{comp3}^*$ according to the following equations:

[MATH 29]

$$\beta_{comp1}^* = k_{\psi1} * \beta_{comp1}$$
$$\beta_{comp2}^* = k_{\psi2} * \beta_{comp2}$$
$$\beta_{comp3}^* = k_{\psi3} * \beta_{comp3}$$

Then, as represented on Figure 6, the variant compensation contributions of blade pitch angles $\beta_{comp1}^*$, $\beta_{comp2}^*$, $\beta_{comp3}^*$ replace the compensation contributions $\beta_{comp1}$, $\beta_{comp2}$, $\beta_{comp3}$ in the rest of the control model 1115. In other words, each controllable blade pitch angle $\beta1$, $\beta2$, $\beta3$ is calculated based on equation 7 by replacing the compensation contributions $\beta_{comp1}$, $\beta_{comp2}$, $\beta_{comp3}$ by the variant compensation contributions of blade pitch angles $\beta_{comp1}^*$, $\beta_{comp2}^*$, $\beta_{comp3}^*$.

The method is similar as the one previously presented except that during the forming step 210, the formed control model is the model 1115 of Figure 6. In addition, according to the variant, during the receiving step 220, the controller 90 in addition receives each azimuth $\psi$1, $\psi$2, $\psi$3. During the calculating step 230, the controller 90 calculate each controllable blade pitch angle $\beta$1, $\beta$2, $\beta$3 in additional from the additional block 1116, preferably implementing equations 29.

With the control method according to the invention, the risk of fracture of the wind turbine 15 is reduced since the platform pitch angle $\phi$ is controlled to be actively damped. It is thus not required strengthening a structure of wind turbine 10 or oversizing the floating platform 55, or making the tower thinner for fixed turbines.

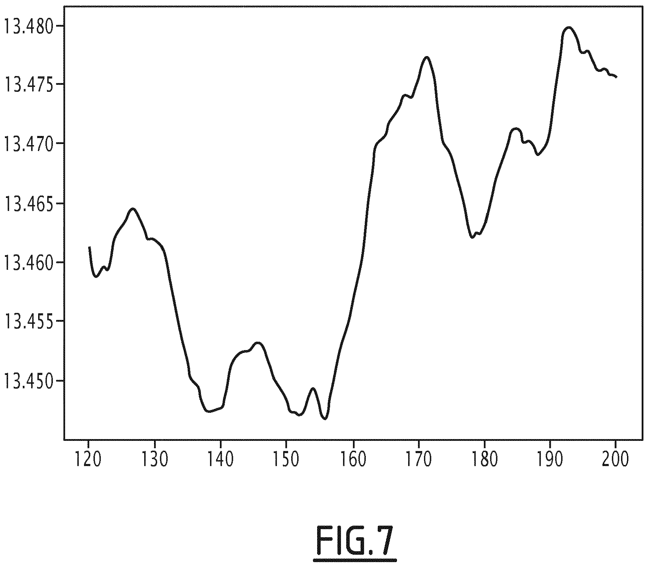

Figure 7 represents an example of a wind excitation facing the wind turbine 15. Figure 7 is a graph of the evolution of the wind velocity, in m/s, as a function of the time, in seconds.

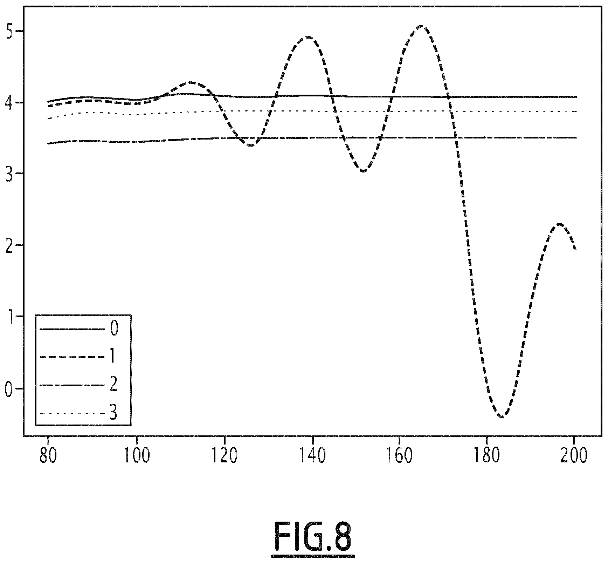

In particular, Figure 8 illustrates comparative graphs representing the time evolution of the platform pitch angle $\phi$ for a wind turbine facing the wind excitation of Figure 7. The solid curve (curve 0) corresponds to the evolution of the platform pitch angle $\phi$ if no platform pitch control is applied, i.e. $k_\beta$ = 0. The dashed curve (curve 1) corresponds to the evolution of the platform pitch angle $\phi$ with a control according to the embodiment of Figure 2. The mixed line curve (curve 2) corresponds to the evolution of the platform pitch angle $\phi$ with a control according the variant represented on Figures 5 and 6. The dotted curve (curve 3) corresponds to the evolution of the platform pitch angle $\phi$ with a control according to the state of the art, i.e. a decoupling compensation gain $k_\beta = h_t \, \frac{\partial \tau_a}{\partial v} \left( \frac{\partial \tau_a}{\partial \beta} \right)^{-1}$.

This simulation is experienced for the following values:

| $h_t$ = 144,386 m | $k_t$ = 38795297611 $N/m$ |
|---|---|
| $D_t$ = 16760000000 $N(m/s)$ | $J_t$ = 812259967034 $N/(m/s^2)$ |

This values correspond to a floating platform UMaine VulturUS that can be find on the following link https://www. nrel.gov/docs/fy20osti/76773.pdf.

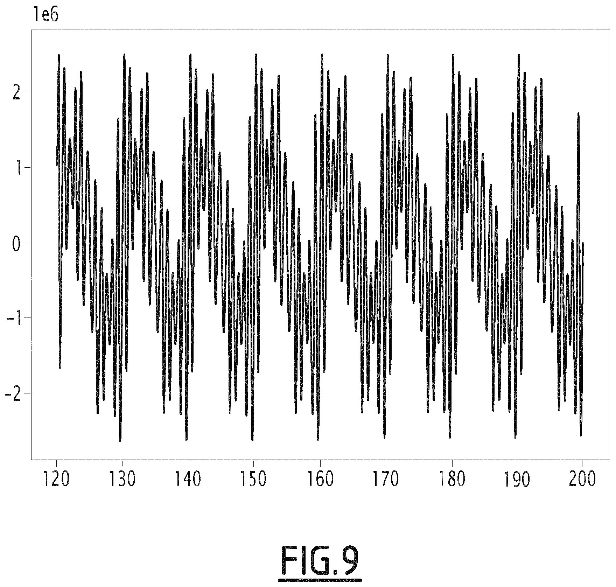

Figure 9 represents an example of a wave excitation facing the wind turbine 15. Figure 9 is a graph of the evolution of the received moment due to the height and velocity of the waves, in Nm, as a function of the time, in seconds.

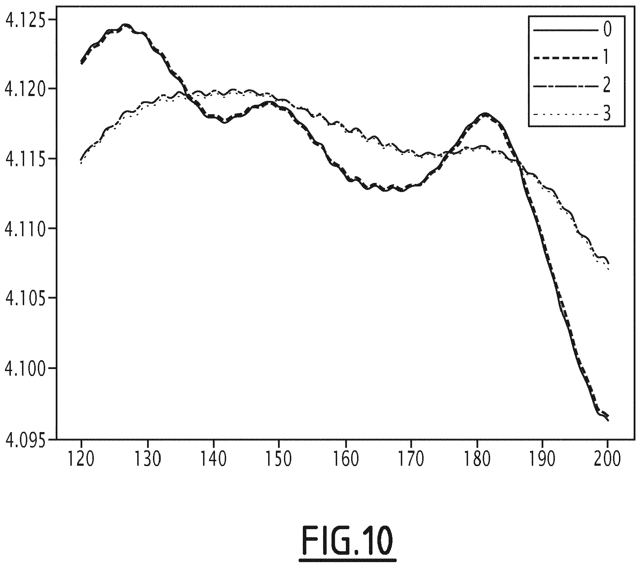

Figure 10 illustrates comparative graphs representing the time evolution of the platform pitch angle $\phi$ for a wind turbine facing the wave excitation of Figure 9.

Similarly as Figure 8, in Figure 10, the solid curve (curve 0) corresponds to the evolution of the platform pitch angle $\phi$ if no platform pitch control is applied, i.e. $k_\beta$ = 0. The dashed curve (curve 1) corresponds to the evolution of the platform pitch angle $\phi$ with a control according to the embodiment of Figure 2. The mixed line curve (curve 2) corresponds to the evolution of the platform pitch angle $\phi$ with a control according the variant represented on Figures 5 and 6. The dotted curve (curve 3) corresponds to the evolution of the platform pitch angle $\phi$ with a control according to the state of the art, i.e. a decoupling compensation gain $k_\beta = h_t \, \frac{\partial \tau_a}{\partial v} \left( \frac{\partial \tau_a}{\partial \beta} \right)^{-1}$.

The preceding values are also used for this simulation.

As it can be seen in Figures 8, the decoupling control induces the highest oscillations for the wind excitation, while it is preferable to reduce them as much as possible. In particular, the oscillations created with the decoupling control are even higher than with not any platform pitch control.

*A contrario,* the control method according to the invention makes it possible to considerably reduce the oscillation's amplitude. In particular, the variant control makes it possible to reduces even more the oscillation's amplitude by considering the momentum induced by each blade 50_1, 50_2, 50_3, via the azimuth $\psi$1, $\psi$2, $\psi$3 values.

In Figure 10, one may notice that the decoupling control reaches similar performances as no pitch control. With such control, the platform pitch angle $\phi$ presents huge oscilations from high to small values. *A contrario,* the control method according to the invention damps said oscillations a lot compared to the previous cases. One may consider that the control method according to the variant present similar results to the control method of Figure 2. However, when paying attention, one may notice that the variant of the control method provide slightly higher platform pitch angles at the beginning of Figure 10, i.e. when the pitch angle is generally high, and slightly smaller platform pitch angles at the end of Figure 10, i.e. when the pitch angle is generally low. Thus, the variant makes it possible to damp even more.

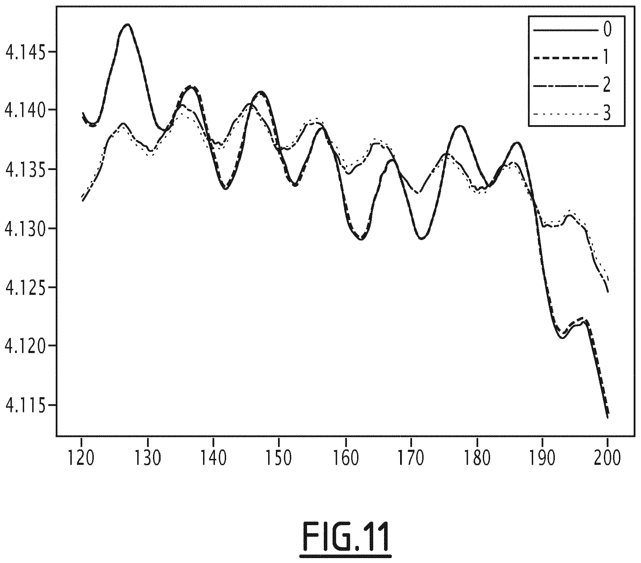

Figure 11 illustrates comparative graphs representing the time evolution of the platform pitch angle $\phi$ for a wind turbine facing the wind excitation of Figure 7 and the wave excitation of Figure 9.

The solid (curve 0), dashed (curve 1), mixed (curve 2) and dotted (curve 3) curves represent the same thing as for Figures 8 and 10.

It can be seen on Figure 11 that the phenomena observed on Figure 8 and 10 are even more visible when the wind turbine is facing both excitations.

It is clear that the preceding embodiments are also applicable if the wind turbine 15 comprises two, four or more blades, preferably if they are equally distributed around the rotation axis R.

All of the embodiments and optional/preferential complement listed above are combinable.

## Claims

1. A control method for controlling a wind turbine (15) comprising:

   - a tower (40) sensibly extending along an elongation axis (E),
   - a rotor (45) comprising blades (50_1, 50_2, 50_3) configured to rotate around a rotation axis (R) sensibly perpendicular to the elongation axis (E),
   - a foundation (55; 155) configured to bear the tower (40), the tower (40) defining at the foundation (55; 155), a tower pitch inclination ($\phi$) between the elongation axis (E) and a vertical axis (V) sensibly perpendicular to a median plan (35) of the water surface (30),
   - an obtaining device (65) configured to obtain a measurement of a variation of the tower pitch inclination ($\phi$), denoted tower pitch speed ($\dot{\phi}$), and
   - a blade actuator (60) configured to control, for each blade (50_1, 50_2, 50_3), a respective controllable blade pitch angle ($\beta 1$, $\beta 2$, $\beta 3$) of the blades (50_1, 50_2, 50_3) around a respective blade axis (B1, B2, B3) sensibly perpendicular to the rotation axis (R),

   the method being implemented by an electronic control system (20) configured to be connected to the obtaining device (65) and to the blade actuator (60), the method comprising the following steps:

   - forming (210) a control model (115) of the wind turbine (15), the control model (115) being configured to actively damp the tower pitch inclination ($\phi$) by calculating, from a measurement of the tower pitch speed ($\dot{\phi}$), a value of each controllable blade pitch angle ($\beta 1$, $\beta 2$, $\beta 3$) to provide to the blade actuator (60),

   the control model (115) comprising, for each blade (50_1, 50_2, 50_3), a compensation gain ($k_{\beta 1}$, $k_{\beta 2}$, $k_{\beta 3}$) calculated based on a set of parameters ($h_t$, $k_t$, $\frac{\partial F_a}{\partial v}$, $\frac{\partial F_a}{\partial \beta 1}$, $\frac{\partial F_a}{\partial \beta 2}$, $\frac{\partial F_a}{\partial \beta 3}$, $D_t$, $\frac{\partial F_a}{\partial v}$, $J_t$, $N_g$ $J_r$, $\frac{\partial \tau_a}{\partial v}$, $\frac{\partial \tau_a}{\partial \beta 1}$, $\frac{\partial \tau_a}{\partial \beta 2}$, $\frac{\partial \tau_a}{\partial \beta 3}$, $\zeta_{plt,des}$, $N_g$, $J_r$, $\frac{\partial \tau_a}{\partial w}$, $v_{rot,des}$, $\zeta_{rot,des}$) representative of a wind turbine dynamic and a predetermined formula, the compensation gain ($k_{\beta 1}$, $k_{\beta 2}$, $k_{\beta 3}$) being configured to be applied to a quantity ($\Delta\dot{\phi}$) representative of the tower pitch speed ($\dot{\phi}$) to determine each controllable blade pitch angle ($\beta 1$, $\beta 2$, $\beta 3$),
   - receiving (220), at a time instant, a measurement of the tower pitch speed ($\dot{\phi}$),
   - calculating (230), for the time instant, a value of each controllable blade pitch angle ($\beta 1$, $\beta 2$, $\beta 3$) based on the control model (115), and
   - transmitting to the wind turbine (15), a control's command comprising the calculated value of each controllable blade pitch angle ($\beta 1$, $\beta 2$, $\beta 3$).

2. The method according to claim 1, wherein during the calculating step (230), at each time instant, the calculated values of the controllable blade pitch angle ($\beta 1$, $\beta 2$, $\beta 3$) are not constantly equal to each other.

3. The method according to claim 1 or 2, wherein during the forming step (210), the compensation gains ($k_{\beta 1}$, $k_{\beta 2}$, $k_{\beta 3}$) are not constantly equal to each other.

4. The method according to any one of the preceding claims, wherein each compensation gain ($k_{\beta 1}$, $k_{\beta 2}$, $k_{\beta 3}$) is negative.

5. The method according to claim any one of the preceding claims, wherein the forming step (210) comprises:

   - receiving (212) the set of parameters ($h_t$, $k_t$, $\frac{\partial F_a}{\partial \beta 1}$, $\frac{\partial F_a}{\partial \beta 2}$, $\frac{\partial F_a}{\partial \beta 3}$, $D_t$, $\frac{\partial F_a}{\partial v}$, $J_t$, $N_g$, $J_r$, $\frac{\partial \tau_a}{\partial v}$, $\frac{\partial \tau_a}{\partial \beta 1}$, $\frac{\partial \tau_a}{\partial \beta 2}$, $\frac{\partial \tau_a}{\partial \beta 3}$, $\zeta_{plt,des}$, $N_g$, $Jr$, $\frac{\partial \tau_a}{\partial w}$, $v_{rot,des}$, $\zeta_{rot,des}$), preferably some of the parameters ($h_t$, $k_t$, $D_t$, $\frac{\partial F_a}{\partial v}$, $J_t$, $N_g$, $J_r$, $\frac{\partial \tau_a}{\partial w}$, $\zeta_{plt,des}$, $N_g$, $J_r$, $v_{rot,des}$, $\zeta_{rot,des}$) being common to each blade (50_1, 50_2, 50_3) and some parameters

$\left(\dfrac{\partial F_a}{\partial \beta 1}, \dfrac{\partial F_a}{\partial \beta 2}, \dfrac{\partial F_a}{\partial \beta 3}, \dfrac{\partial \tau_a}{\partial \beta 1}, \dfrac{\partial \tau_a}{\partial \beta 2}, \dfrac{\partial \tau_a}{\partial \beta 3}\right)$ being respective to each blade (50_1, 50_2, 50_3),

- calculating (214) each compensation gain ($k_{\beta 1}, k_{\beta 2}, k_{\beta 3}$) by applying the predetermined formula to the received set of parameters ($h_t$, $k_t$, $\dfrac{\partial F_a}{\partial \beta 1}, \dfrac{\partial F_a}{\partial \beta 2}, \dfrac{\partial F_a}{\partial \beta 3}$, $D_t$, $\dfrac{\partial F_a}{\partial v}$, $J_t$, $Ng$, $\dfrac{\partial \tau_a}{\partial v}, \dfrac{\partial \tau_a}{\partial \beta 1}, \dfrac{\partial \tau_a}{\partial \beta 2}, \dfrac{\partial \tau_a}{\partial \beta 3}$, $\zeta_{plt,des}$, $N_g$, $J_r$, $\dfrac{\partial \tau_a}{\partial w}$, $v_{rot,des}$, $\zeta_{rot,des}$), and

- forming (216) the control model (115) based on each of the compensation gains ($k_{\beta 1}, k_{\beta 2}, k_{\beta 3}$).

6. The method according to any one of the preceding claims, wherein the set of parameters ($h_t$, $\dfrac{\partial F_a}{\partial \beta 1}, \dfrac{\partial F_a}{\partial \beta 2}, \dfrac{\partial F_a}{\partial \beta 3}$, $D_t$, $\dfrac{\partial F_a}{\partial v}$, $J_t$, $N_g$, $J_r$, $\dfrac{\partial \tau_a}{\partial v}, \dfrac{\partial \tau_a}{\partial \beta 1}, \dfrac{\partial \tau_a}{\partial \beta 2}, \dfrac{\partial \tau_a}{\partial \beta 3}$, $\zeta_{plt,des}$, $N_g$, $J_r$, $\dfrac{\partial \tau_a}{\partial w}$, $v_{rot,des}$, $\zeta_{rot,des}$) is representative of a wind turbine model (120) describing the evolution the tower pitch speed ($\phi$) as a function of a wind speed (v) facing the wind turbine (15) and as a function of waves moment (w) at the water surface (30) of the water body (25).

7. The method according to claims 3 and 4, wherein during the forming step (210), the received set of parameters ($h_t$, $k_t$, $\dfrac{\partial F_a}{\partial \beta 1}, \dfrac{\partial F_a}{\partial \beta 2}, \dfrac{\partial F_a}{\partial \beta 3}$, $D_t$, $\dfrac{\partial F_a}{\partial v}$, $J_t$, $N_g$, $J_r$, $\dfrac{\partial \tau_a}{\partial v}, \dfrac{\partial \tau_a}{\partial \beta 1}, \dfrac{\partial \tau_a}{\partial \beta 2}, \dfrac{\partial \tau_a}{\partial \beta 3}$, $\zeta_{plt,des}$, $N_g$, $J_r$, $\dfrac{\partial \tau_a}{\partial w}$, $v_{rot,des}$, $\zeta_{rot,des}$) comprises a desired foundation damping ratio ($\zeta_{plt,des}$), a closed-loop model linking the control model (115) and the wind turbine dynamic model (120) comprising a second order transfer function $\left(\left[G_{plt_{1,1}}(s) \quad G_{plt_{1,2}}(s)\right]\right)$ relating the foundation pitch inclination ($\phi$) to the wind speed (v) and the waves moment ($w$), the second order transfer function $\left(\left[G_{plt_{1,1}}(s) \quad G_{plt_{1,2}}(s)\right]\right)$ including a damping ratio ($\zeta$) depending on each compensation gain ($k_{\beta 1}, k_{\beta 2}, k_{\beta 3}$), during the forming step (210) each compensation gain ($k_{\beta 1}, k_{\beta 2}, k_{\beta 3}$) being calculated (214) so that the damping ratio ($\zeta$) of the second order transfer function $\left(\left[G_{plt_{1,1}}(s) \quad G_{plt_{1,2}}(s)\right]\right)$ sensibly matches the desired platform damping ratio ($\zeta_{plt,des}$).

8. The method according to claim 7, wherein the set of parameters ($h_t$, $k_t$, $\dfrac{\partial F_a}{\partial \beta 1}, \dfrac{\partial F_a}{\partial \beta 2}, \dfrac{\partial F_a}{\partial \beta 3}$, $D_t$, $\dfrac{\partial F_a}{\partial v}$, $J_t$, $N_g$, $J_r$, $\dfrac{\partial \tau_a}{\partial v}, \dfrac{\partial \tau_a}{\partial \beta 1}, \dfrac{\partial \tau_a}{\partial \beta 2}, \dfrac{\partial \tau_a}{\partial \beta 3}$, $\zeta_{plt,des}$, $N_g$, $J_r$, $\dfrac{\partial \tau_a}{\partial w}$, $v_{rot,des}$, $\zeta_{rot,des}$) comprises:

○ a spring like restoring coefficient ($k_t$),
○ a height ($h_t$) of the tower (40) of the wind turbine (15) according to the elongation axis,
○ for each blade (50_1, 50_2, 50_3), a variation $\left(\dfrac{\partial F_a}{\partial \beta_1}, \dfrac{\partial F_a}{\partial \beta_2}, \dfrac{\partial F_a}{\partial \beta_3}\right)$ of an aerodynamic force ($F_a$) created on the wind turbine (15) by air flowing through said blade (50_1, 50 2, 50_3) of the rotor (45),
○ a natural damping coefficient ($D_t$),
○ a variation $\left(\dfrac{\partial F_a}{\partial v}\right)$, of the aerodynamic force ($F_a$) created on the wind turbine (15) by air flowing through the blades (50_1, 50_2, 50_3) of the rotor (45), and
○ a moment of inertia ($J_t$),

during the forming step (210), each compensation gain ($k_{\beta 1}, k_{\beta 2}, k_{\beta 3}$) being calculated (214) according to the following equation:

$$k_{\beta i} = \dfrac{1}{h_t \dfrac{\partial F_a}{\partial \beta_i}} \left(D_t + h_t^2 \dfrac{\partial F_a}{\partial v} - 2\sqrt{k_t J_t}\,\zeta_{plt,des}\right)$$

9. The method according to any of claims 5 to 8, wherein the received set of parameters ($h_t$, $k_t$, $\frac{\partial F_a}{\partial \beta 1}$, $\frac{\partial F_a}{\partial \beta 2}$, $\frac{\partial F_a}{\partial \beta 3}$, $D_t$, $\frac{\partial F_a}{\partial v}$ $J_t$, $N_g$, $J_r$, $\frac{\partial \tau_a}{\partial v}$, $\frac{\partial \tau_a}{\partial \beta 1}$, $\frac{\partial \tau_a}{\partial \beta 2}$, $\frac{\partial \tau_a}{\partial \beta 3}$, $\zeta_{plt,des}$, $N_g$, $J_r$, $\frac{\partial \tau_a}{\partial w}$, $v_{rot,des}$, $\zeta_{rot,des}$) comprises quantities ($\frac{\partial F_a}{\partial v}$, $\frac{\partial F_a}{\partial \beta 1}$, $\frac{\partial F_a}{\partial \beta 2}$, $\frac{\partial F_a}{\partial \beta 3}$) representative of the aerodynamic force ($F_a$) created on the wind turbine (15) by air flowing through each blade (50_1, 50_2, 50_3) of the rotor (45),
calculating (214) each compensation gain ($k_{\beta 1}$, $k_{\beta 2}$, $k_{\beta 3}$) comprising calculating each compensation gain ($k_{\beta 1}$, $k_{\beta 2}$, $k_{\beta 3}$) based on said quantities ($\frac{\partial F_a}{\partial v}$, $\frac{\partial F_a}{\partial \beta 1}$, $\frac{\partial F_a}{\partial \beta 2}$, $\frac{\partial F_a}{\partial \beta 3}$) representative of the aerodynamic force ($F_a$).

10. The method according to any one of the preceding claims, wherein the receiving step (220) also comprises receiving, at the time instant, a reference tower pitch speed ($\dot{\phi}_r$), the reference tower pitch speed ($\dot{\phi}_r$) being preferably substantially equal to zero,
during the calculating step (230), the value of each controllable blade pitch angle ($\beta 1$, $\beta 2$, $\beta 3$) being calculated so that the tower pitch speed ($\dot{\phi}$) converges to the reference tower pitch speed ($\dot{\phi}_r$).

11. The method according to any of the preceding claims, wherein the forming step (210), the receiving step (220), the calculating step (230) and the transmitting step (240) are repeated for a plurality of successive time instants, preferably in real time.

12. The method according to any of the preceding claims, wherein during the receiving step (220), the azimuth ($\psi 1$, $\psi 2$, $\psi 3$) of each blade (50_1, 50_2, 50_3) is received, during the calculating step (230), the value of each controllable blade pitch angle ($\beta 1$, $\beta 2$, $\beta 3$) of each blade (50_1, 50_2, 50_3) being in addition calculated based the azimuth ($\psi 1$, $\psi 2$, $\psi 3$) of said blade (50_1, 50_2, 50_3).

13. The method according to the preceding claim, wherein during the calculating step (230), a compensation contribution ($\beta_{comp1}$, $\beta_{comp2}$, $\beta_{comp3}$) is calculated by applying each compensation gain ($k_{\beta 1}$, $k_{\beta 2}$, $k_{\beta 3}$) to a quantity ($\Delta \dot{\phi}$) representative of the tower pitch speed ($\dot{\phi}$),

for each blade (50_1, 50_2, 50_3) a variant compensation contribution ($\beta^*_{comp1}$, $\beta^*_{comp2}$, $\beta^*_{comp3}$) being calculated by multiplying the compensation contribution ($\beta_{comp1}$, $\beta_{comp2}$, $\beta_{comp3}$) of said blade (50_1, 50_2, 50_3) with a quantity (($1 + \sin(\psi 1 + phase1)$, $1 + \sin(\psi 2 + phase2)$, $1 + \sin(\psi 3 + phase3)$)) varying as a function of the sinus of the corresponding azimuth ($\psi 1$, $\psi 2$, $\psi 3$), each blade pitch angle ($\beta 1$, $\beta 2$, $\beta 3$) being calculated based on the corresponding variant compensation contribution ($\beta^*_{comp1}$, $\beta^*_{comp2}$, $\beta^*_{comp3}$).

14. A set of computer program(s) comprising software instructions, which, when being executed by one or several computers, implement a method according to any of the preceding claims.

15. An electronic control system for controlling a wind turbine (15) comprising:

- a tower (40) sensibly extending along an elongation axis (E),
- a rotor (45) comprising blades (50_1, 50_2, 50_3) configured to rotate around a rotation axis (R) sensibly perpendicular to the elongation axis (E),
- a foundation (55; 155) configured to bear the tower (40), the tower (40) defining at the foundation (55; 155), a tower pitch inclination ($\phi$) between the elongation axis (E) and a vertical axis (V) sensibly perpendicular to a median plan (35) of the water surface (30),
- an obtaining device (65) configured to obtain a measurement of a variation of the tower pitch angle ($\phi$), denoted tower pitch speed ($\dot{\phi}$), and
- a blade actuator (60) configured to control, for each blade (50_1, 50_2, 50_3), a respective controllable blade pitch angle ($\beta 1$, $\beta 2$, $\beta 3$) of the blades (50_1, 50_2, 50_3) around a respective blade axis (B1, B2, B3) sensibly perpendicular to the rotation axis (R),

the electronic control system (20) being configured to be connected to the obtaining device (65) and to the blade actuator (60), and comprising:

- a forming module (85) configured to form a control model (115) of the wind turbine (15), the control model (115) being configured to actively damp the tower pitch inclination ($\phi$) by calculating, from a measurement of the tower pitch speed ($\dot{\phi}$), a value of each controllable blade pitch angle ($\beta 1$, $\beta 2$, $\beta 3$) to provide to the blade actuator (60),

the control model (115) comprising, for each blade (50_1, 50_2, 50_3) a compensation gain ($k_{\beta 1}$, $k_{\beta 2}$, $k_{\beta 3}$) calculated based on a set of parameters ($h_t$, $k_t$, $\frac{\partial F_a}{\partial v}$, $\frac{\partial F_a}{\partial \beta 1}$, $\frac{\partial F_a}{\partial \beta 2}$, $\frac{\partial F_a}{\partial \beta 3}$, $D_t$, $\frac{\partial F_a}{\partial v}$, $J_t$, $N_g$, $J_r$, $\frac{\partial \tau_a}{\partial v}$, $\frac{\partial \tau_a}{\partial \beta 1}$, $\frac{\partial \tau_a}{\partial \beta 2}$, $\frac{\partial \tau_a}{\partial \beta 3}$, $\zeta_{plt,des}$, $N_g$, $J_r$, $\frac{\partial \tau_a}{\partial w}$, $v_{rot,des}$, $\zeta_{rot,des}$) representative of a wind turbine dynamic and a predetermined formula, the compensation gain ($k_{\beta 1}$, $k_{\beta 2}$, $k_{\beta 3}$) being configured to be applied to a quantity ($\Delta \dot{\phi}$) representative of the tower pitch speed ($\dot{\phi}$) to determine each controllable blade pitch angle ($\beta 1$, $\beta 2$, $\beta 3$),

- a controller (90) configured to receive, at a time instant, a measurement of the tower pitch speed ($\dot{\phi}$),

the controller (90) being in addition configured to calculate, for the time instant, a value of each controllable blade pitch angle ($\beta 1$, $\beta 2$, $\beta 3$) based on the control model (115) and the received measurement of the tower pitch speed ($\dot{\phi}$), and to transmit to the wind turbine (15), a control's command comprising the calculated value of each controllable blade pitch angle ($\beta 1$, $\beta 2$, $\beta 3$).

## FIG.1

**FIG.2**

FIG.3

<u>FIG.4</u>

## FIG.5

FIG.6

FIG.7

FIG.8

EP 4 571 098 A1

FIG.9

**FIG.10**

**FIG.11**

Europäisches Patentamt
European Patent Office
Office européen des brevets

# EUROPEAN SEARCH REPORT

**Application Number**

EP 23 30 7205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 489 872 A1 (SSB WIND SYSTEMS GMBH & CO KG [DE]) 22 August 2012 (2012-08-22) * paragraphs [0024], [0026] - [0038] * ----- | 1-15 | INV. F03D7/02 F03D7/04 |
| X | US 2021/156357 A1 (CAPONETTI FABIO [DK] ET AL) 27 May 2021 (2021-05-27) * paragraphs [0040] - [0055] * ----- | 1,10,11, 14,15 | |
| X | JP 2015 124736 A (HITACHI LTD) 6 July 2015 (2015-07-06) * paragraphs [0031] - [0062] * ----- | 1,10,11, 14,15 | |

TECHNICAL FIELDS
SEARCHED (IPC)

F03D

The present search report has been drawn up for all claims

| Place of search | Date of completion of the search | Examiner |
|---|---|---|
| The Hague | 6 May 2024 | Libeaut, Laurent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 30 7205

06-05-2024

| Patent document cited in search report | | Publication date | Patent family member(s) | | Publication date |
|---|---|---|---|---|---|
| EP 2489872 | A1 | 22-08-2012 | CN | 102644546 A | 22-08-2012 |
| | | | CN | 202718807 U | 06-02-2013 |
| | | | EP | 2489872 A1 | 22-08-2012 |
| | | | WO | 2012110173 A2 | 23-08-2012 |
| US 2021156357 | A1 | 27-05-2021 | CN | 111712631 A | 25-09-2020 |
| | | | EP | 3724489 A1 | 21-10-2020 |
| | | | ES | 2902370 T3 | 28-03-2022 |
| | | | US | 2021156357 A1 | 27-05-2021 |
| | | | WO | 2019114908 A1 | 20-06-2019 |
| JP 2015124736 | A | 06-07-2015 | DE | 102014226956 A1 | 02-07-2015 |
| | | | JP | 6165053 B2 | 19-07-2017 |
| | | | JP | 2015124736 A | 06-07-2015 |
| | | | TW | 201533316 A | 01-09-2015 |

For more details about this annex : see Official Journal of the European Patent Office, No. 12/82